# EUROPÄISCHE PATENTANMELDUNG

(11) **EP 3 363 286 A2**
(43) Veröffentlichungstag der Anmeldung: **22.08.2018**
(21) Anmeldenummer: 18156688.6
(22) Anmeldetag: 14.02.2018
(51) Int. Cl.: A01K 51/00, A01K 47/02, A01M 1/00, A01M 13/00

(54) **VERDUNSTERSYSTEME, UMFASSEND EINE VERDUNSTEREINHEIT FÜR AMEISENSÄURE UND EIN AN DIE VERDUNSTEREINHEIT ANGEPASSTES STANDARD-WABENLEERRÄHMCHEN**

(30) Priorität: 17.02.2017 DE 102017103338
(71) Anmelder: Weiland, Joachim Meinrad, 12559 Berlin (DE); Weiland, Martin, 10318 Berlin (DE); Weiland, Stefan, 01097 Dresden (DE)
(72) Erfinder: Weiland, Joachim Meinrad, 12559 Berlin (DE); Weiland, Martin, 10318 Berlin (DE); Weiland, Stefan, 01097 Dresden (DE)
(74) Vertreter: Gulde & Partner

(57) **Zusammenfassung**

Die Erfindung betrifft eine Verdunstereinheit (100) zum Verdunsten von Flüssigkeiten, insbesondere zur Verdunstung von Ameisensäure zur Bekämpfung von Varroamilben in Bienenbeuten (BB), die zumindest einen Vorratsbehälter (2) für die Flüssigkeit, eine die Flüssigkeit aufnehmende und durch Verdunstung abgebende Dochtkarte (S8) und eine die Dochtkarte (S8) aufnehmende Einheit (6) aufweist, wobei die Einheit (6) zur Abgabe der Flüssigkeit an die Dochtkarte (S9) in einem Zusammenbauzustand der Verdunstereinheit (10) mit dem Vorratsbehälter (2) reversibel in Verbindung steht.

Erfindungsgemäß ist vorgesehen, dass die Verdunstereinheit (100) ein schienenartiges Befestigungselement (10) umfasst, in dem der Vorratsbehälter (2) im Zusammenbauzustand der Verdunstereinheit (100) reversibel angeordnet ist, wobei der Vorratsbehälter (2), die Einheit (6) und das schienenartige Befestigungselement (10) derart dimensioniert sind, dass die Verdunstereinheit (100) mittels des schienenartigen Befestigungselementes (10) ohne Überstand sowohl in einem an die gebräuchlichsten Beutentypen angepassten neuen Standard-Wabenleerrähmchen (LR') als auch mit einem geringen Überstand gegenüber der jeweiligen Trägerbreite der gebräulichsten Wabenleerrähmchen (LR) universell anordbar ist.

## Beschreibung

Die Erfindung betrifft eine Verdunstereinheit, insbesondere eine Verdunstereinheit von Ameisensäure, die als Langzeitverdunster zur kontinuierlichen Verdunstung von Ameisensäure 60% ad us. vet. für die Behandlung der Krankheit Varroose (Varroa destructor) der Honigbiene (Apis mellifera) eingesetzt wird. Die Verdunstereinheit ist zusammen mit der Ameisensäure 60% ad us. vet. ein in Deutschland zugelassenes Bienenarzneimittel - veröffentlicht im Bundesgesetzblatt Nr. 31 vom 11. Juli 2000.

Die Anordnung der Verdunstereinheit zur Verdunstung von Ameisensäure in einem Wabenleerrähmchen ist bereits aus den Druckschriften DE 199 43 711 A1, DE 196 45 300 A1, EP 0 959 674 B1, DE 196 21 149 A1 sowie DE 196 10 649 A1 bekannt.

Verschieden ausgestaltete Verdunstereinheiten werden in der Praxis in verschiedenen Anordnungsvarianten eingesetzt, wobei die Verdunstereinheiten der Anmelder unter der Bezeichnung "Nassenheider classic" und "Nassenheider horizontal" und "Nassenheider professional" bekannt sind.

Mögliche Anordnungsvarianten sind beispielsweise unter der URL-Adresse http://www.nassenheider.com/files/dokum/Gebrauchsanweisung_NV_clsc_hor_2016.pdf im Internet einsehbar. Aus dem Dokument wird deutlich, dass die Verdunstereinheiten "Nassenheider classic" und "Nassenheider horizontal" im bestimmungsgemäßen Gebrauch in einer ersten Variante, der sogenannten "Horizontalvariante im Wabenleerrähmchen" im Inneren eines Wabenleerrähmchens angeordnet sind. Im Zusammenbauzustand von Verdunstereinheit und Wabenleerrähmchen liegt die Verdunstereinheit im bestimmungsgemäßen Gebrauch somit in der durch den Oberträger, den Unterträger und die Seitenträger des Wabenleerrähmchens aufgespannten Ebene. In einer zweiten Variante, der sogenannten "Horizontalvariante in der Leerzarge" sind die Verdunstereinheiten im bestimmungsgemäßen Gebrauch in einer Wanne oberhalb eines Verdunstungsvlieses angeordnet, die im Gebrauch horizontal in der Leerzarge einer Bienenbeute angeordnet ist. Ohne die Wanne wird die Verdunstereinheit in einer vereinfachten Ausführung auf einer flachen säuredichten Unterlage und dem Verdunstungsvlies direkt auf einem Oberträger eines Wabenrähmchens angeordnet. Die Wanne und das Verdunstungsvlies beziehungsweise die Unterlage und das Verdunstungsvlies liegen im bestimmungsgemäßen Gebrauch auf dem Oberträger des Wabenrähmchens und somit quer zu der durch den Oberträger, den Unterträger und die Seitenträger des Wabenrähmchens aufgespannten Ebene des Wabenrähmchens.

Bekannt ist ferner die Variante der Verdunstereinheit, die als "Nassenheider professional" bezeichnet wird. Details zu dieser Verdunstereinheit sind beispielsweise unter der URL-Adresse http://www.nassenheider.com/files/dokum/30020_gebr_de%20web.pdf im Internet einsehbar. In dieser Variante ist die Verdunstereinheit gegenüber der zuvor erläuterten zweiten Variante, der sogenannten "Horizontalvariante in der Leerzarge" hinsichtlich den die Ameisensäure aufnehmenden Behälters modifiziert ausgeführt.

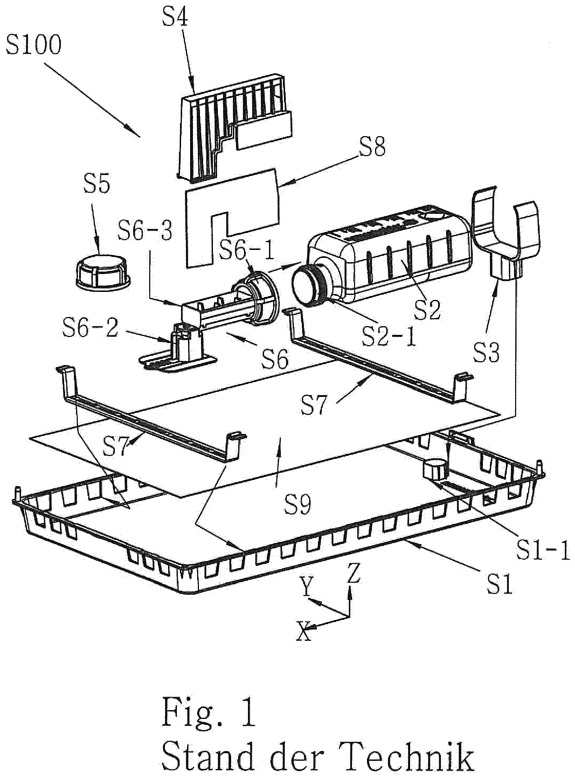

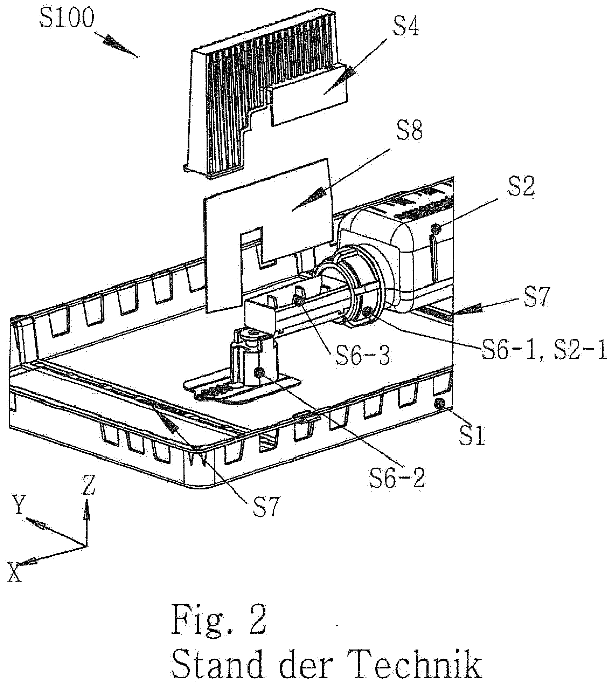

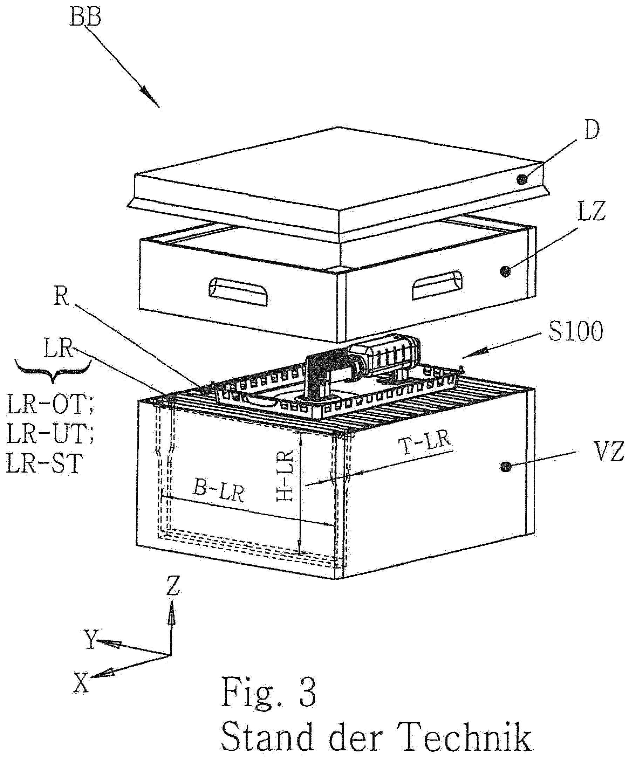

Ausgangspunkt der Erfindung ist die Ausführungsvariante der Verdunstereinheit "Nassenheider professional", die gegenüber den anderen Verdunstereinheiten bereits einige weiterführende technische Details aufweist, die in den Figuren 1 bis 3 nachfolgend in einer Zusammenschau erläutert werden.

Die Figuren 1 bis 3 zeigen:
- Figur 1: eine schematische Explosionszeichnung einer herkömmlichen Verdunstereinheit "Nassenheider professional" in der Ausführung mit einer Wanne;
- Figur 2: einen vergrößerten Ausschnitt der schematischen Explosionszeichnung gemäß Figur 1 in der die Montage der herkömmlichen Verdunstereinheit verdeutlicht wird;
- Figur 3: die Anordnung der Wanne und der Verdunstereinheit auf einer Vollzarge einer Bienenbeute.

Der Verdunster "Nassenheider professional" ist als Verdunstereinheit S100 ausgebildet. Die Einheit umfasst eine Wanne S1 mit Sockel S1-1, einen als Flasche S2 ausgebildeten Vorratsbehälter mit Aufschraubgewinde S2-1, eine Standklammer S3, einen Dochtkartenhalter S4, einen Deckel S5, eine Aufschraubeinheit S6 mit Überwurfmutter S6-1, Fuß S6-2 und Auslauf S6-3 sowie zwei Spangen S7, ein Verdunstungsvlies S9 und eine Dochtkarte S8.

Folgender Gebrauch ist gemäß den Figuren 1 bis 3 in einer Zusammenschau vorgesehen:
1. An der Imkerei: Befüllung der Flasche S2 mit Ameisensäure 60% ad.us.vet. und Verschluss mit dem Deckel S5.
2. Transport der Flasche S2 zum Bienenstand.
3. Anschrauben des Auslaufs S6-3 mithilfe einer Überwurfmutter S6-1 an dem Aufschraubgewinde S2-1 der Flasche S2 nach entsprechender Entfernung des Deckels S5.
4. Verdunstungsvlies S9 in der Wanne S1 ausbreiten und mit den Spangen S7 in der Wanne S1 befestigen.
5. Standklammer S3 über den Sockel S1-1 der Wanne S1 stülpen.
6. Aufschraubeinheit S6 mit Überwurfmutter S6-1 und dem Fuß S6-2 sowie der angeschraubten Flasche S2 in die Wanne S1 stellen.
7. Auswahl der Dochtkarte S8 je nach Beutentyp und sonstigen Randparametern und die ausgewählte Dochtkarte S8 in den Auslauf S6-3 der Aufschraubeinheit S6 stecken und den Dochthalter S4 montieren.
8. Wanne S1 der Verdunstereinheit S100 auf den Wabenrähmchen R einer Vollzarge VZ innerhalb einer leeren Vollzarge VZ oder einer leeren Halbzarge LZ (gemäß Darstellung) einer mit einem Beutendeckel D versehenen Bienenbeute BB platzieren.

Die Erläuterungen machen deutlich, dass die Arbeitsweise mit der herkömmlichen Verdunstereinheit S100 "Nassenheider professional" durch ihre Ausgestaltung und die damit ermöglichte einfache Montage bereits eine vorteilhafte Lösung darstellt.

Es besteht jedoch bisher aufgrund der Ausgestaltung und der Dimensionierung der Verdunstereinheit S100 "Nassenheider professional" keine praktikable Möglichkeit die bekannte Verdunstereinheit S100 in einem Wabenleerrähmchen anzuordnen. Es besteht somit ausgehend von den Vorteilen der bekannten Verdunstereinheit S100 bei den Anwendern ein Bedarf eine neue Verdunstereinheit zu schaffen, die analog zu der erläuterten Variante "Horizontalvariante im Wabenleerrähmchen" in einem Wabenleerrähmchen montiert werden kann.

Insbesondere, wenn eine leere Vollzarge VZ oder leere Halbzarge LZ oberhalb einer mit Wabenrähmchen R gefüllten Vollzarge VZ einer Bienenbeute BB nicht zur Verfügung steht, ist die Anwendung der herkömmlichen Verdunstereinheit S100 nicht möglich, da der vorhandene Bauraum in der mit Wabenrähmchen R gefüllten Vollzarge VZ unterhalb des Beutendeckels D der Bienenbeute BB nicht ausreicht.

Die Aufgabe der Erfindung besteht somit darin, eine neuartige Verdunstereinheit zu schaffen, die in einem Wabenleerrähmchen montiert werden kann. Zudem soll die zu schaffende Verdunstereinheit und das Wabenleerrähmchen derart ausgebildet sein, dass die Verdunstung der Ameisensäure optimal abläuft und die Bienen des Bienenvolkes vor der Ameisensäure weitestgehend geschützt sind. Die Verdunstereinheit und das Wabenleerrähmchen sollen für den anwendenden Imker zudem sehr praktikabel ausgestaltet sein.

Ausgangspunkt der Erfindung ist eine Verdunstereinheit zum Verdunsten von Flüssigkeiten, insbesondere zur Verdunstung von Ameisensäure zur Bekämpfung von Varroamilben in Bienenbeuten, die zumindest einen Vorratsbehälter für die Flüssigkeit, eine die Flüssigkeit aufnehmende und die Flüssigkeit durch Verdunstung abgebende Dochtkarte und eine die Dochtkarte aufnehmende Einheit aufweist, wobei die Einheit zur Abgabe der Flüssigkeit an die Dochtkarte in einem Zusammenbauzustand der Verdunstereinheit mit dem Vorratsbehälter reversibel in Verbindung steht.

Der Vorratsbehälter ist eine auswechselbare Flasche.

Erfindungsgemäß ist vorgesehen, dass die Verdunstereinheit ein schienenartiges Befestigungselement umfasst, in dem der Vorratsbehälter im Zusammenbauzustand reversibel und somit auswechselbar angeordnet ist.

Bevorzugt ist vorgesehen, dass das Befestigungselement eine Schiene ist, die mindestens einen Aufnahmeschuh aufweist, der in einer Gebrauchslage der Verdunstereinheit von einer Oberseite eines sich in Längsrichtung der Schiene erstreckenden Grundträgers der Schiene orthogonal abgeht, wobei der Vorratsbehälter reversibel in die Schiene einsetzbar ist.

Es ist ferner vorgesehen, dass der Vorratsbehälter von der Mantelfläche des Vorratsbehälters nach innen abgestellte Ausnehmungen aufweist, in die der mindestens eine Aufnahmeschuh im Zusammenbauzustand eingreift, sodass der Aufnahmeschuh gegenüber der angrenzenden Mantelfläche des Vorratsbehälters zurückgesetzt angeordnet ist und somit gegenüber der Flasche keinen Überstand bildet.

Bevorzugt ist ferner vorgesehen, dass die nach innen abgestellten Ausnehmungen in der Mantelfläche des Vorratsbehälters jeweils mindestens eine noch weiter nach innen abgestellte Vertiefung aufweist, in die im Zusammenbauzustand Raststege eingreifen, die auf der zu der Mantelfläche gerichteten Seite, der sich gegenüberliegenden orthogonal von der Oberseite des Grundträgers der Schiene abgehenden Wandungen des mindestens einen Aufnahmeschuhs, angeordnet sind.

Vorgesehen ist ferner, dass der Grundträger der Schiene eine Deckelaufnahme aufweist, die orthogonal von der Oberseite des Grundträgers der Schiene abgeht und als umlaufender Stegrand ausgebildet ist, dessen Innenkontur mit der Außenkontur eines vom Vorratsbehälter abnehmbaren Deckels korrespondiert.

Die Verdunstereinheit ist erfindungsgemäß Teil eines Verdunstersystems.

Mehrere Standard-Verdunstersysteme umfassen stets die Verdunstereinheit und entweder ein neuartiges mehrteiliges Standard-Wabenleerrähmchen oder einteiliges Standard-Wabenleerrähmchen, wie nachfolgend erläutert wird.

Die Standard-Verdunstersysteme umfassen erfindungsgemäß die Verdunstereinheit nach mindestens einem der Ansprüche 1 bis 5, welche im Zusammenbauzustand in einem mehrteiligen Standard-Wabenleerrähmchen nach den Ansprüchen 6 und 9 bis 13 oder einem einteiligen Standard-Wabenleerrähmchen nach den Ansprüchen 7 bis 13 anordbar ist.

Erfindungsgemäß ist bevorzugt vorgesehen, dass die Verdunstereinheit derart dimensioniert ist, dass die Verdunstereinheit im Zusammenbauzustand mittels des schienenartigen Befestigungselementes ohne Überstand in dem den Bauraum vorgebenden einteiligen oder mehrteiligen Standard-Wabenleerrähmchen mit seinen Bauraum-Innenmaßen anordbar ist, wobei eine Höhe zwischen einem Oberträger und einem Unterträger und eine Tiefe durch die Trägerbreite der Träger und eine Breite zwischen zwei Seitenträgern des jeweiligen Standard-Wabenleerrähmchens bestimmt ist. Die Verdunstereinheit ist im Zusammenbauzustand auf der Oberseite des Unterträgers des jeweiligen Standard-Wabenleerrähmchen befestigt.

Ein anderes Verdunstersystem umfasst die Verdunstereinheit und ein herkömmliches Wabenleerrähmchen:
Das andere Verdunstersystem umfasst erfindungsgemäß die Verdunstereinheit nach mindestens einem der Ansprüche 1 bis 5, welche im Zusammenbauzustand in einem herkömmlichen Wabenleerrähmchen anordbar ist.

Dabei ist die Verdunstereinheit derart dimensioniert, dass die Verdunstereinheit im Zusammenbauzustand mittels des schienenartigen Befestigungselementes mit einem seitlichen Überstand in dem den Bauraum vorgebenden Wabenleerrähmchen mit seinen Bauraum-Innenmaßen anordbar ist, wobei eine Höhe zwischen einem Oberträger und einem Unterträger und eine Tiefe durch die Trägerbreite der Träger und eine Breite zwischen zwei Seitenträgern des Wabenleerrähmchens bestimmt ist, wobei der seitliche Überstand in Abhängigkeit der Trägerbreite der Träger der verschiedenen herkömmlichen Wabenleerrähmchen gebildet wird. Die Verdunstereinheit ist im Zusammenbauzustand ebenfalls auf der Oberseite des Unterträgers des herkömmlichen Wabenleerrähmchens befestigt.

Erfindungsgemäß ist vorgesehen, dass das mehrteilige Standard-Wabenleerrähmchen verclipsbar oder verrastbar ist, welches vor einem Zusammenbau aus vier Einzelträgern, einem Oberträger und einem Unterträger sowie zwei Seitenträgern ausgebildet ist, wodurch das mehrteilige Standard-Wabenleerrähmchen vor dem Zusammenbau ein geringes Packvolumen aufweist, wodurch in vorteilhafter Weise gegenüber montierten Wabenleerrähmchen eine größere Anzahl von zusammenbaubaren mehrteiligen Standard-Wabenleerrähmchen preiswert geliefert, insbesondere versendet werden kann.

Bei allen Verdunstersystemen ist erfindungsgemäß vorgesehen, dass auf einer in der Gebrauchslage den Bienen zugewandten Seite der Standard-Wabenleerrähmchen oder des herkömmlichen Wabenleerrähmchens ein Schutzelement und ein Verdunstungsvlies anbringbar sind, die entweder unabhängig voneinander oder vor der Anordnung an dem Standard-Wabenleerrähmchen oder dem herkömmlichen Wabenleerrähmchen miteinander randseitig und/oder teilflächig oder vollflächig zusammengefügt, insbesondere verschweißt sind, wie in der Beschreibung noch detailliert erläutert ist.

Die Träger des mehrteiligen Standard-Wabenleerrähmchens sind in bevorzugter Ausgestaltung der Erfindung im Zusammenbauzustand miteinander reversibel über endseitig der Träger angeordnete miteinander korrespondierende Mittel verrastet oder verclipst.

Bevorzugt ist vorgesehen, dass das mehrteilige, insbesondere verclipsbare oder verrastbare Standard-Wabenleerrähmchen und das einteilige Standard-Wabenleerrähmchen mindestens zwei Nasen, sogenannte Längsnasen, aufweist, die das jeweilige Standard-Wabenleerrähmchen ausgehend von der Breite des Oberträgers zwischen zwei Seitenträgern jeweils endseitig um je eine Nasenlänge verlängern, sodass die Standard-Wabenleerrähmchen auf randseitigen Auflagerelementen innerhalb einer Vollzarge einer Bienenbeute des Beutentyps "Deutsch-Normal" [Einheitsmaß] aufsetzbar sind, die Wabenleerrähmchen mit einer Mindestbreite von 370 mm (Außenmaß der Wabenleerrähmchen) zuzüglich den entsprechenden Nasenlängen der Nasen aufnimmt.

Mit anderen Worten, die erfindungsgemäßen Standard-Wabenleerrähmchen sind unter Verwendung der Längsnasen in Bienenbeuten verwendbar, deren Auflagerelemente bei einer Nasenlänge von circa 10 mm zwischen 370 und 390 mm voneinander entfernt sind, das heißt, die Bienenbeute bei auf der Innenwandung liegenden Auflagerelementen eine Breite von größer 390 mm aufweist.

Dadurch können die Standard-Wabenleerrähmchen, wie soeben erläutert, passgenau in der Bienenbeute des Beutentyps "Deutsch-Normal", jedoch nicht in anderen Beutentypen angeordnet werden.

Durch folgende erfindungsgemäße Ausgestaltungen können die Standard-Wabenleerrähmchen in allen breiteren Beutentypen, z.B. dem Beutentyp "Dandant" und dem Beutentyp "Zander" und dem Beutentyp "Langstroth" verwendet werden.

Bei einer ersten Ausgestaltung der erfindungsgemäßen Standard-Wabenleerrähmchen wird mindestens eine Längsnase mit einer auf ein gewünschtes Maß kürzbaren Überlänge versehen. Dadurch sind die Standard-Wabenleerrähmchen mittels der Unterseite der Nasen in einen in Längsrichtung des Oberträgers gesehen auch in breiteren Beutentypen auf dafür vorgesehenen randseitigen Auflagerelementen innerhalb der Vollzargen aufsetzbar, wobei die Gesamtlänge aus der Länge (Außenmaß = 370 mm) des Oberträgers und einer Längsnase sowie einer weiteren Längsnase mit der kürzbaren Überlänge auf die Abstandsbreite der Auflagerelemente des derzeit gebräuchlichsten Bienenbeutentypen "Dadant"-Beuten oder "Zander"-Beuten oder "Langstroth"-Beuten oder "Deutsch-Normal" abgestimmt werden kann.

Die Gesamtlänge setzt sich beispielsweise aus der Länge (Außenmaß = 370 mm) des Oberträgers, einer Überlänge = 10 mm einer Längsnase und mindestens einen kürzbaren Überlänge = 100 mm der anderen Längsnase zusammen und beträgt somit beispielsweise insgesamt 480 mm. Die Längsnase mit der kürzbaren Überlänge kann an die Auflagebreite der Auflagerelemente der gebräuchlichsten Bienenbeutentypen "Dadant"-Beuten oder "Zander"-Beuten oder "Langstroth"-Beuten oder "Deutsch-Normal" abgestimmt werden, indem die Längsnase mit der kürzbaren Überlänge passend abgeschnitten wird.

Bei einer zweiten Ausgestaltung weisen die Seitenträger der erfindungsgemäßen Standard-Wabenleerrähmchen ferner jeweils einendseitig und beidseitig quer zur Längsrichtung gesehen Nasen, sogenannte Quernasen auf, welche die Tiefe der Seitenträger beidseitig quer zur Längsrichtung verbreitern.

Somit weisen die Seitenträger bevorzugt vier Quernasen auf. Die Unterseiten der Quernasen können in vorteilhafter Weise in die in Längsrichtung gesehen breiteren gebräuchlichen Beutentypen über die Unterseiten der Quernasen derart eingehängt werden, sodass das Standard-Wabenleerrähmchen mit der einen Seite mittels zwei Quernasen - quer zur Längsrichtung gesehen - auf einer Beutenwand der jeweilige Bienenbeute und mit der anderen Seite mittels den zwei gegenüberliegenden Quernasen - ebenfalls quer zur Längsrichtung gesehen - auf einem benachbarten Wabenrähmchen oder einem benachbarten Wabenleerrähmchen aufliegt.

Die erfindungsgemäßen Standard-Wabenleerrähmchen können aber auch auf der einen Seite - quer zur Längsrichtung gesehen - mittels zwei Quernasen auf einem benachbarten Wabenrähmchen oder Wabenleerrähmchen und mit der anderen Seite - quer zur Längsrichtung gesehen - mittels der zwei gegenüberliegenden Quernasen auf einem benachbarten Wabenrähmchen R oder einem benachbarten Wabenleerrähmchen aufliegen.

In bevorzugter Ausgestaltung der Erfindung, sind das einteilige und das mehrteilige Standard-Wabenleerrähmchen aus Kunststoff hergestellt, wobei die Verdunstereinheit ebenfalls aus Kunststoff ausgebildet ist. Insofern sind die Standard-Verdunstersysteme komplett aus Kunststoff ausgebildet.

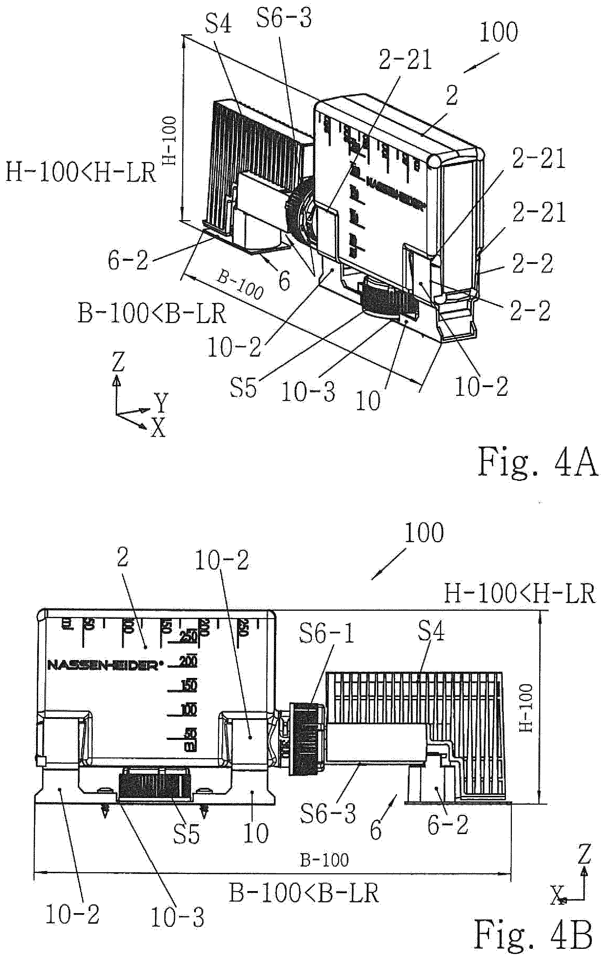

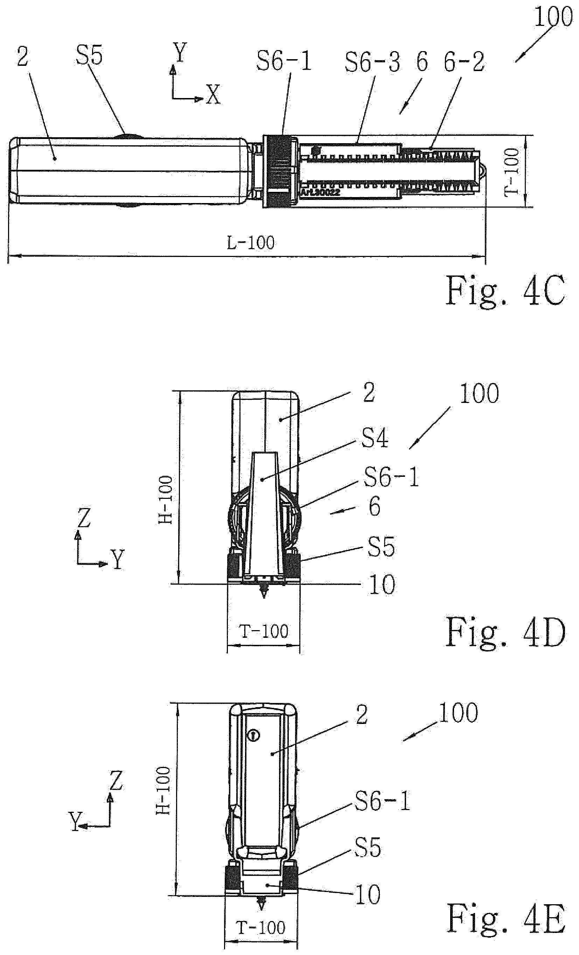

Die Erfindung wird nachfolgend anhand der Figuren 4 bis 14B detailliert erläutert.

Es zeigen:
- Figur 4A: eine erfindungsgemäße Verdunstereinheit gemäß der Erfindung in einer parallelperspektivischen Darstellung;
- Figur 4B: die Verdunstereinheit gemäß Figur 4A in einer Seitenansicht;
- Figur 4C: die Verdunstereinheit gemäß Figur 4A in einer Draufsicht;
- Figur 4D: die Verdunstereinheit gemäß Figur 4A in einer Stirnseitenansicht von links;
- Figur 4E: die Verdunstereinheit gemäß Figur 4A in einer Stirnseitenansicht von rechts;

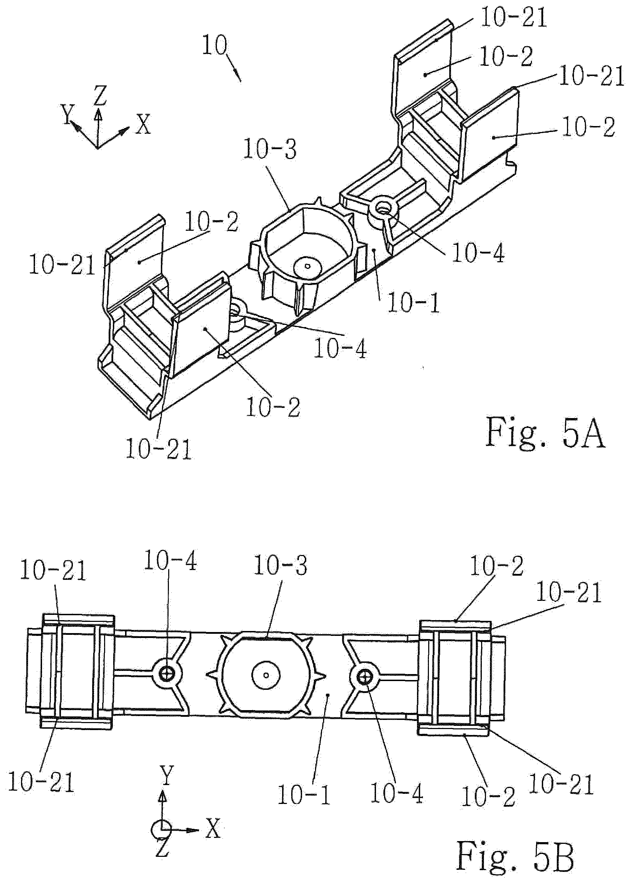

- Figur 5A: eine Schiene der erfindungsgemäßen Verdunstereinheit in einer parallelperspektivischen Ansicht schräg von oben;
- Figur 5B: die Schiene gemäß Figur 5A in einer Draufsicht;

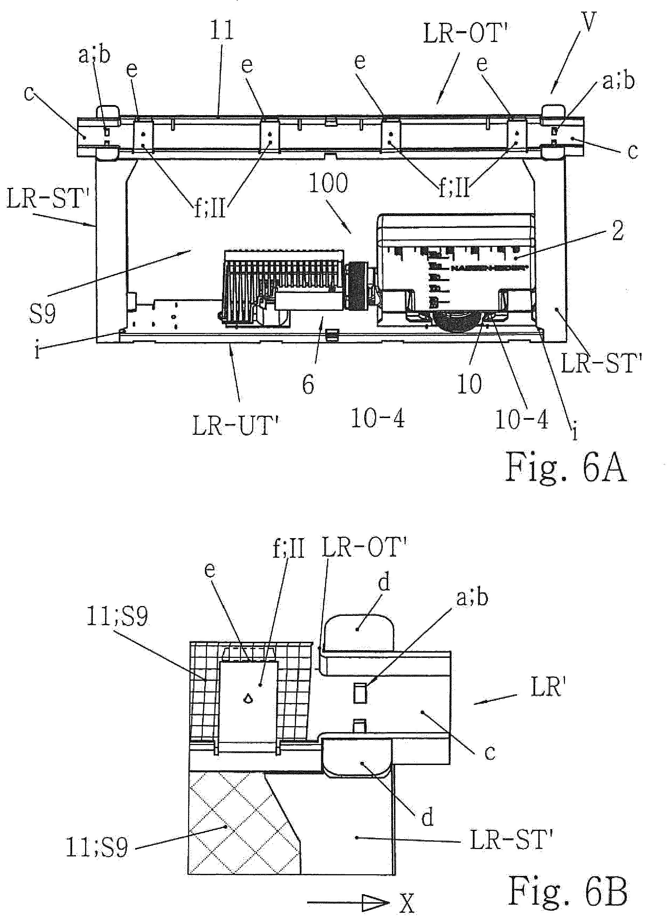

- Figur 6A: ein erstes Standard-Verdunstersystem, umfassend ein erfindungsgemäßes mehrteiliges Standard-Wabenleerrähmchen und die erfindungsgemäße Verdunstereinheit gemäß den Figuren 4A bis 5B in einer parallelperspektivischen Ansicht schräg von oben auf die Verdunstereinheit, sowie eine erste Ausführungsvariante eines Befestigungsmittels zur Befestigung einer Schutzgaze an der bienenzugewandten Seite des mehrteiligen Standard-Wabenleerrähmchens in der Fixierungsposition der Schutzgaze durch das Befestigungsmittel;
- Figur 6B: das mehrteilige Standard-Wabenleerrähmchen gemäß Figur 6A mit einer vergrößerten Detaildarstellung einer Verbindungsstelle zwischen einem Oberträger und einem Seitenträger des mehrteiligen Standard-Wabenleerrähmchens;

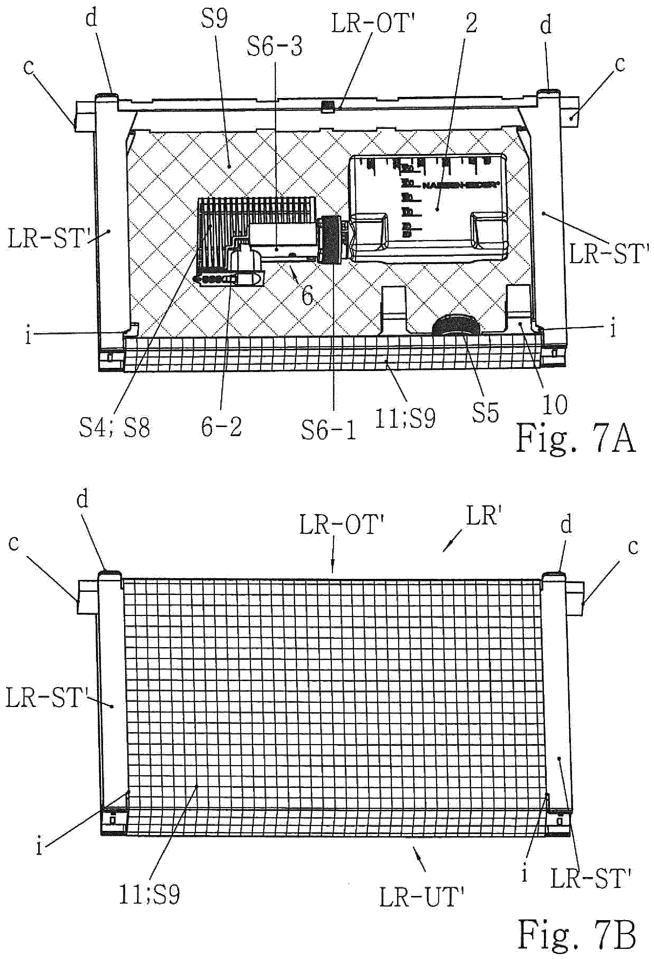

- Figur 7A: das erste Standard-Verdunstersystem, umfassend das mehrteilige Standard-Wabenleerrähmchen und die erfindungsgemäße Verdunstereinheit gemäß den Figuren 4A bis 5B in einer Ansicht schräg von unten auf eine in der Gebrauchslage des mehrteiligen Standard-Wabenleerrähmchens den Bienen zugewandten Seite mit einem demontierten Teil der Verdunstereinheit;
- Figur 7B: das erste Standard-Verdunstersystem gemäß den Figuren 6A und 7A in einer parallelperspektivischen Ansicht von seiner Rückseite;

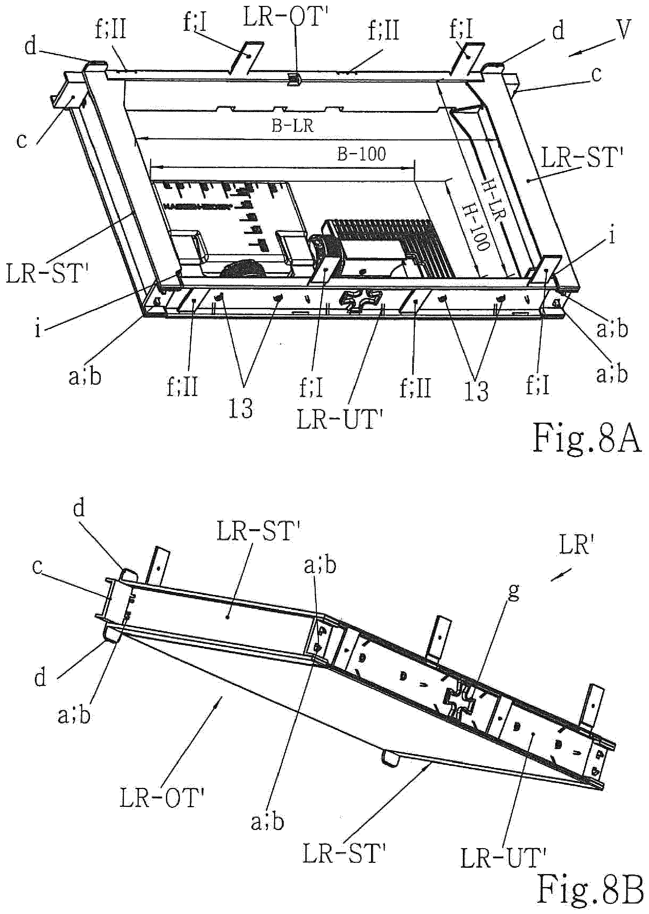

- Figur 8A: das erfindungsgemäße erste Standard-Verdunstersystem in einer weiteren parallelperspektivischen Ansicht schräg von unten;
- Figur 8B: das erfindungsgemäße erste Standard-Verdunstersystem in einer weiteren parallelperspektivischen Ansicht schräg von unten, gegenüber der Figur 8A verschwenkt;

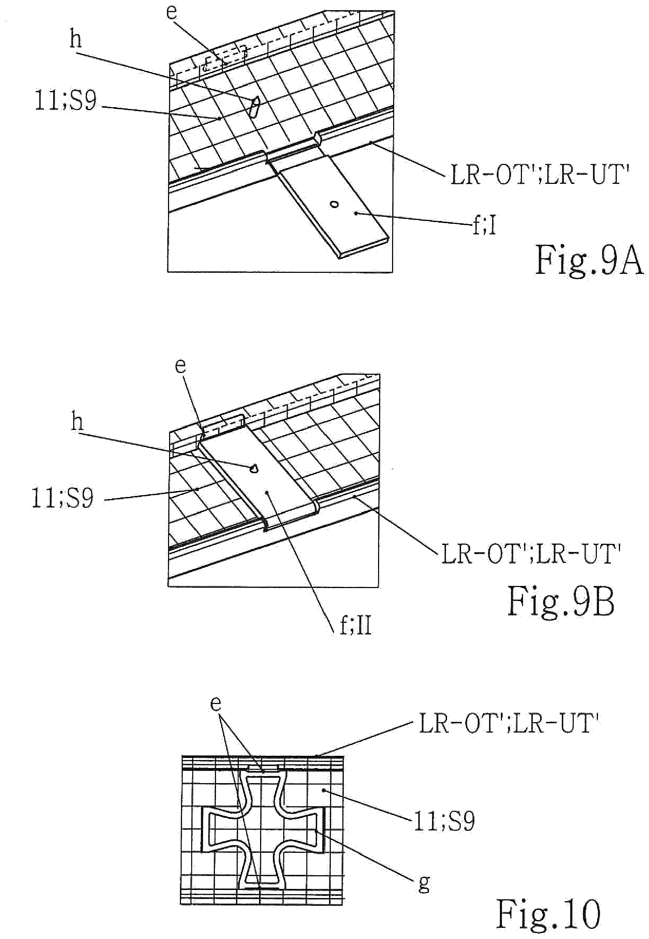

- Figur 9A: eine zweite Ausführungsvariante eines Befestigungsmittels zur Befestigung einer Schutzgaze an der bienenzugewandten Seite eines mehrteiligen Standard-Wabenleerrähmchens in der Offenposition des Befestigungsmittels;
- Figur 9B: die zweite Ausführungsvariante eines Befestigungsmittels zur Befestigung einer Schutzgaze an der bienenzugewandten Seite des mehrteiligen Standard-Wabenleerrähmchens in der Schließposition des Befestigungsmittels;
- Figur 10: eine dritte Ausführungsvariante eines Befestigungsmittels zur Befestigung einer Schutzgaze an der bienenzugewandten Seite des mehrteiligen Standard-Wabenleerrähmchens in der Fixierungsposition der Schutzgaze durch das Befestigungsmittel;

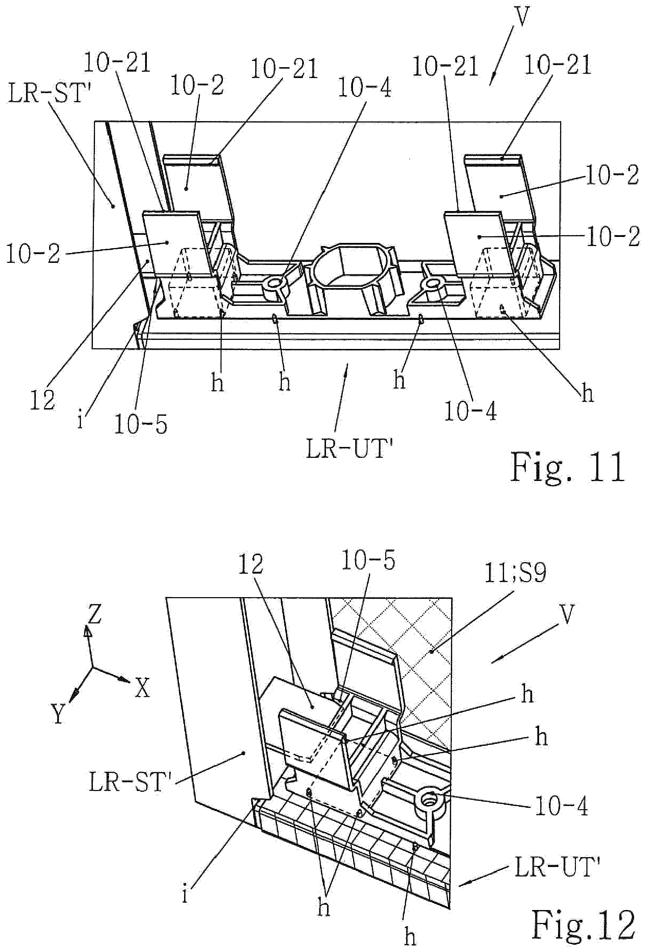

- Figur 11: eine vergrößerte parallelperspektivische Darstellung der Montage der Schiene in dem mehrteiligen Standard-Wabenleerrähmchen;
- Figur 12: eine vergrößerte parallelperspektivische Detaildarstellung der Schiene im montierten Zustand in dem mehrteiligen Standard-Wabenleerrähmchen;

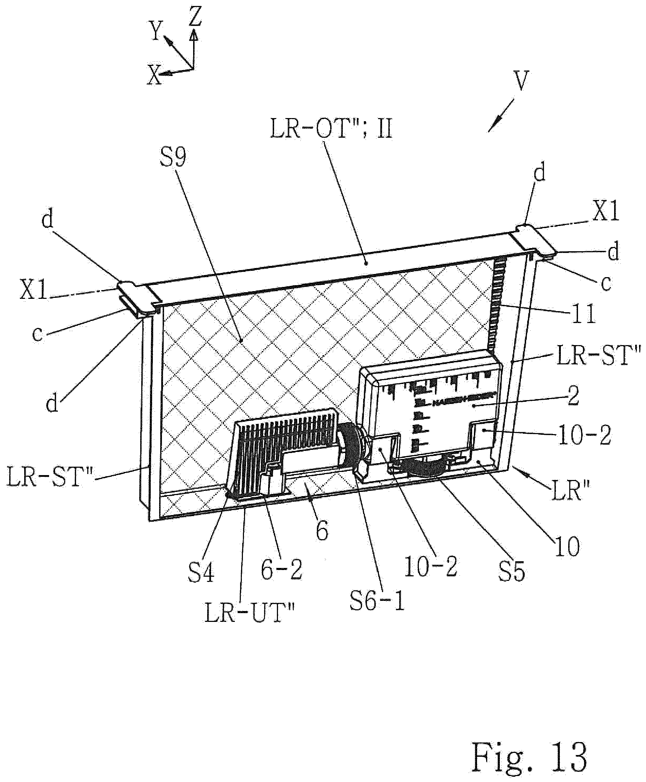

- Figur 13: ein zweites Standard-Verdunstersystem, umfassend ein erfindungsgemäßes einteiliges Standard-Wabenleerrähmchen und die erfindungsgemäße Verdunstereinheit gemäß den Figuren 4A bis 5B in einer parallelperspektivischen Ansicht schräg von oben auf die Verdunstereinheit;

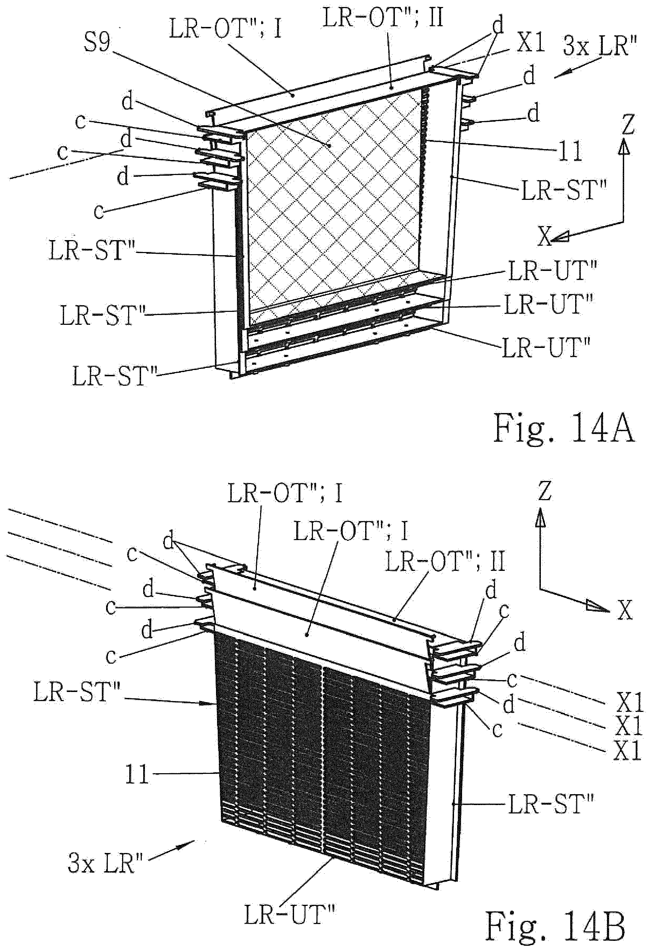

- Figur 14A: das zweite Standard-Verdunstersystem gemäß Figur 13 (mit noch nicht montierter Verdunstereinheit) zur Verdeutlichung der Stapelbarkeit des erfindungsgemäßen einteiligen Standard-Wabenleerrähmchen in einer parallelperspektivischen Vorderansicht schräg von oben; und
- Figur 14B: das zweite Standard-Verdunstersystem gemäß Figur 13 (mit noch nicht montierter Verdunstereinheit) zur Verdeutlichung der Stapelbarkeit des erfindungsgemäßen einteiligen Standard-Wabenleerrähmchen in einer parallelperspektivischen Rückansicht schräg von oben.

Die Erfindung wird nachfolgend erläutert, wobei die bereits vorgestellten und aus dem Stand der Technik bekannten Bauteile in der weiteren Erläuterung mit denselben Bezeichnungen und Bezugszeichen geführt werden.

Für die Zwecke der Beschreibung soll nachfolgend in Bezug auf die Figuren 1 bis 3 und die Figuren 4 bis 12 eine horizontale Richtung einer Verdunstereinheit oder eines Wabenleerrähmchens mit "X" bezeichnet werden. Mit "Y" wird die Richtung in der Horizontalen orthogonal zur X-Richtung bezeichnet, und mit "Z" wird die Richtung in der Vertikalen der Verdunstereinheit orthogonal zur X-Richtung bezeichnet.

Die Aufgabe der Erfindung wird durch die Schaffung von Verdunstersystemen und Standard-Verdunstersystemen gelöst, welche im Zusammenbauzustand eine aufeinander abgestimmte Einheit aus einer neuartigen Verdunstereinheit 100 und einem herkömmlichen Wabenleerrähmchen LR oder einem neuartigen Wabenleerrähmchen LR', LR", dem sogenannten einteiligen Standard-Wabenleerrähmchen LR" oder dem sogenannten mehrteiligen Standard-Wabenleerrähmchen LR' darstellen, welche jeweils die Verdunstereinheit 100 aufnehmen.

Die Anordnung der Verdunstereinheit 100 kann mit anderen Worten in vorteilhafter Weise in einem herkömmlichen Wabenleerrähmchen LR und in dem jeweiligen erfindungsgemäßen Standard-Wabenleerrähmchen LR', LR" erfolgen, wie später noch detailliert erläutert wird.

Die Figur 4A zeigt zunächst die erfindungsgemäße Verdunstereinheit 100 in einer parallelperspektivischen Darstellung. In einer Zusammenschau mit den Figuren 4B (Seitenansicht), 4C (Draufsicht), 4D (Stirnseitenansicht von links) und 4E (Stirnseitenansicht von rechts) werden zunächst die sich vom Stand der Technik gemäß den Figuren 1 bis 3 unterscheidenden Merkmale der erfindungsgemäßen Verdunstereinheit 100 verdeutlicht.

Ein technisches Merkmal der Erfindung besteht darin, dass die Maße, Höhe H-100 x Breite B-100 x Tiefe T-100 der Verdunstereinheit 100, die gemäß der Figuren der Z-Richtung = Höhe H-100, der X-Richtung = Breite B-100 und der Y-Richtung = Tiefe T-100 zugeordnet sind, wie folgt in Bezug auf ein herkömmliches Wabenleerrähmchen LR und in Bezug auf ein erfindungsgemäßes Standard-Wabenleerrähmchen LR'; LR" festgelegt sind.

Maße der Verdunstereinheit 100 in Bezug auf herkömmliche Wabenleerrähmchen LR:
Die Breite B-100 der Verdunstereinheit 100 ist kleiner als das Innenmaß zwischen zwei Seitenträgern LR-ST von bisher gebräuchlichen Wabenleerrähmchen LR verschiedener Typen von Wabenleerrähmchen LR gemäß den verschiedenen Bienenbeutentypen.

Beispielsweise beträgt das Innenmaß zwischen zwei Seitenträgern LR-ST eines herkömmlichen Wabenleerrähmchens LR eines Beutentyps mindestens B-LR = 250 mm. Die Breite B-100 der Verdunstereinheit 100 ist erfindungsgemäß kleiner als 250 mm (B-100 < B-LR), wodurch die Verdunstereinheit 100 problemlos zwischen den Seitenträgern LR-ST des zur Verfügung stehenden Bauraums innerhalb derjenigen Wabenleerrähmchens LR anordbar ist, dessen Breiten-Innenmaß B-LR < 250 mm beträgt.

Die Höhe H-100 der Verdunstereinheit 100 ist erfindungsgemäß kleiner als das Innenmaß zwischen einem Oberträger LR-OT und einem Unterträger LR-UT von bisher gebräuchlichen Wabenleerrähmchen LR verschiedener Typen von Wabenleerrähmchen LR gemäß den verschiedenen Bienenbeutentypen.

Beispielsweise beträgt das Innenmaß zwischen dem Oberträger LR-OT und dem Unterträger LR-UT eines Wabenleerrähmchen LR eines Beutentyps mindestens H-LR = 200 mm. Die Höhe H-100 der Verdunstereinheit 100 ist erfindungsgemäß kleiner als 200 mm (H-100 < H-LR), wodurch die Verdunstereinheit 100 problemlos zwischen dem Oberträger LR-OT und dem Unterträger LR-UT des zur Verfügung stehenden Bauraums innerhalb derjenigen Wabenleerrähmchen LR anordbar ist, dessen Höhen-Innenmaß H-LR < 200 beträgt.

Die Tiefe T-100 der Verdunstereinheit 100 ist erfindungsgemäß kleiner als das Maß eines Trägers (Trägerbreite) eines gebräuchlichen Wabenleerrähmchens LR verschiedener Typen von Wabenleerrähmchen LR gemäß den verschiedenen Bienenbeutentypen.

Die Trägerbreite T-LR der Träger LR-ST, LR-OT, LR-UT verschiedener herkömmlicher Wabenleerrähmchen LR variiert nur unwesentlich und beträgt zwischen 20 bis 35 mm, sodass die Trägerbreite T-LR mindestens 20 mm und maximal 35 mm beträgt.

Die Tiefe T-100 der Verdunstereinheit 100 ist erfindungsgemäß 38 mm (T-100 > T-LR), wodurch die Verdunstereinheit 100 in Abhängigkeit der Trägerbreite T-LR herkömmlicher Wabenleerrähmchen LR in dem zur Verfügung stehenden Bauraum des Wabenleerrähmchens LR mit einem gegenüber den unterschiedlichen Tiefen der herkömmlichen Wabenleerrähmchen LR geringen Überstand zwischen 3 und 18 mm angeordnet ist. Der Überstand ist dabei bei symmetrischer Anordnung der Verdunstereinheit 100 auf dem Unterträger LR-UT des herkömmlichen Wabenleerrähmchens LR so gering, dass der beidseitige Überstand maximal zwischen 1,5 mm und 9 mm beträgt.

Dieser geringe Überstand kann problemlos in einer Wabengasse (zwischen den Wabenrähmchen liegender freier Raum) zwischen zwei herkömmlichen Wabenrähmchen hinein ragen. Bekanntermaßen beträgt der als Wabengasse bezeichnete optimale Abstand unabhängig von der Tiefe (Tragerbreite) der herkömmlichen Wabenleerrähmchen LR von Wabenmitte zu Wabenmitte = 35 mm.

Mit anderen Worten die Verdunstereinheit 100 ist derart dimensioniert, dass sie mit geringem Überstand in einem Bauraum anordbar ist, der durch die jeweiligen Maße H-LR x B-LR x T-LR der jeweiligen herkömmlichen Wabenleerrähmchen LR der verschiedenen Beutentypen vorgegeben ist, wodurch die Verdunstereinheit 100 in vorteilhafter Weise in allen gebräuchlichen Wabenleerrähmchen LR einsetzbar ist.

Maße der Verdunstereinheit 100 in Bezug auf eines der erfindungsgemäßen Standard-Wabenleerrähmchen LR'; LR":
Die Breite B-100 der Verdunstereinheit 100 ist kleiner als das Innenmaß zwischen zwei Seitenträgern LR-ST eines der Standard-Wabenleerrähmchen LR'; LR".

Das Innenmaß zwischen zwei Seitenträgern LR-ST'; LR-ST" des jeweiligen Standard-Wabenleerrähmchen LR'; LR" beträgt B-LR = 350 mm. Die Breite B-100 der Verdunstereinheit 100 ist erfindungsgemäß kleiner als 350 mm (B-100 < B-LR), wodurch die Verdunstereinheit 100 problemlos zwischen den Seitenträgern LR-ST'; LR-ST" des zur Verfügung stehenden Bauraums des jeweiligen Standard-Wabenleerrähmchens LR'; LR" anordbar ist.

Die Höhe H-100 der Verdunstereinheit 100 ist erfindungsgemäß kleiner als das Innenmaß zwischen einem Oberträger LR-OT'; LR-OT" und einem Unterträger LR-UT'; LR-UT" eines der erfindungsgemäßen Standard-Wabenleerrähmchen LR'; LR".

Das Innenmaß zwischen dem Oberträger LR-OT'; LR-OT" und dem Unterträger LR-UT'; LR-UT" des jeweiligen Standard-Wabenleerrähmchens LR'; LR" beträgt H-LR = 200 mm. Die Höhe H-100 der Verdunstereinheit 100 ist erfindungsgemäß kleiner als 200 mm (H-100 < H-LR), wodurch die Verdunstereinheit 100 problemlos zwischen dem Oberträger LR-OT'; LR-OT" und dem Unterträger LR-UT'; LR-UT" des zur Verfügung stehenden Bauraums des jeweiligen Standard-Wabenleerrähmchens LR'; LR" anordbar ist.

Die Tiefe T-100 der Verdunstereinheit 100 ist erfindungsgemäß kleiner als das Maß T-LR eines Trägers LR-OT', LR-UT', LR-ST'; LR-OT", LR-UT", LR-ST" des jeweiligen Standard-Wabenleerrähmchens LR'; LR".

Die Tiefe T-100 der Verdunstereinheit 100 beträgt erfindungsgemäß 38 mm und die Tiefe T-LR (Trägerbreite) des jeweiligen Standard-Wabenleerrähmchens LR'; LR" beträgt erfindungsgemäß 40 mm (T-100 < T-LR), wodurch die Verdunstereinheit 100 in den Standard-Wabenleerrähmchen LR'; LR" in dem zur Verfügung stehenden Bauraum der Standard-Wabenleerrähmchen LR'; LR" ohne Überstand angeordnet werden kann.

Mit anderen Worten die Verdunstereinheit 100 ist derart dimensioniert, dass sie mit geringem Überstand in einem Bauraum eines herkömmlichen Wabenleerrähmchens LR und ohne Überstand in einem Bauraum eines Standard-Wabenleerrähmchens LR'; LR" anordbar ist, wodurch die Verdunstereinheit 100 in vorteilhafter Weise universell einsetzbar ist.

Unter Berücksichtigung dieser Randbedingungen umfasst die Verdunstereinheit 100 als Vorratsbehälter eine sich vom Stand der Technik unterscheidende Flasche 2, einen sich vom Stand der Technik unterscheidenden Fuß 6-2 als Teil der damit neuen Aufschraubeinheit 6 und ein bisher im Stand der Technik nicht vorhandenes Befestigungselement 10, welches zur Befestigung der Verdunstereinheit 100 in dem jeweiligen Standard-Wabenleerrähmchen LR'; LR" oder dem herkömmlichen Wabenleerrähmchen LR dient.

Ein weiteres technisches Merkmal der Erfindung besteht darin, dass das Aufschraubgewinde S6-1 der Aufschraubeinheit 6, sowie der Auslauf S6-3 der Aufschraubeinheit 6 mit der daran angeordneten Überwurfmutter S6-1 und das Aufschraubgewinde S2-1 der Flasche 2 gegenüber dem Stand der Technik unverändert dimensioniert ausgestaltet wird, sodass sich insbesondere Vorteile bei der Herstellung der Bauteile für die herkömmliche Verdunstereinheit S100 und der erfindungsgemäßen Verdunstereinheiten 100 ergeben. So ist beispielsweise der Deckel S5 in beiden Verdunstereinheiten S100, 100 kompatibel verwendbar.

Ferner sind als weiteres technisches Merkmal der Dochtkartenhalter S4 und Dochtkarte S8 in vorteilhafter Weise in der herkömmlichen Verdunstereinheit S100 dem "Nassenheider professional" sowie in den herkömmlichen Verdunstereinheiten "Nassenheider classic" und "Nassenheider horizontal" sowie der erfindungsgemäßen Verdunstereinheit 100 kompatibel einsetzbar.

Das Befestigungselement 10 stellt insbesondere ein Element der erfindungsgemäßen Verdunstereinheit 100 dar, welches bei den herkömmlichen Verdunstereinheiten "Nassenheider professional" sowie "Nassenheider classic" und "Nassenheider horizontal" nicht vorhanden ist.

Das Befestigungselement 10 ist erfindungsgemäß als Schiene ausgebildet. Die Schiene 10 ist in Figur 5A in einer parallelperspektivischen Ansicht schräg von oben und in Figur 5B in einer Draufsicht dargestellt.

In der Zusammenschau der Figuren 5A bis 5B sowie der Figuren 4A bis 4E wird deutlich, dass die Schiene 10 einen Grundträger 10-1 (vergleiche Figur 5A) aufweist, von dem mindestens eine in der bevorzugten Ausführungsform zwei Haltemittel 10-2 orthogonal von dem Grundträger 10-1 der Schiene 10 abgehen, die als spangenartige Aufnahmeschuhe ausgebildet sind.

Die Aufnahmeschuhe 10-2 (vergleiche Figur 5A) umfassen jeweils zwei sich in Z-Richtung erstreckende gegenüberstehende Wandungen, auf deren Innenseiten je ein Rastmittel 10-21 angeordnet ist, die in der dargestellten Ausführungsform als sich in X-Richtung erstreckende Raststege ausgebildet sind.

Die Flasche 2 weist (vergleiche Figur 4A) im Zusammenbauzustand auf ihrer zu der Schiene 10 gerichteten Seite - ausgehend von der quaderförmigen Mantelfläche der Flasche 2 - vier nach innen abgestellte Ausnehmungen 2-2 auf. Die Ausnehmungen 2-2 korrespondieren hinsichtlich ihrer Negativkontur mit der Positivkontur der Wandungen der Aufnahmeschuhe 10-2, wodurch die Aufnahmeschuhe 10-2 die Flasche 2 im Bereich der Ausnehmungen 2-2 im Zusammenbauzustand formschlüssig aufnehmen können.

Die Wandungen der Aufnahmeschuhe 10-2 sind elastisch und werden leicht aufgespreizt, sobald die Flasche 2 in die Aufnahmeschuhe 10-2 eingesetzt wird. Die Ausnehmungen 2-2 bilden ferner an der dem Grundträger 10-1 gegenüberliegenden Seite nutartige sich in X-Richtung erstreckende Vertiefungen 2-21, die in den Figuren 4A und 4E erkennbar sind. Im Zusammenbauzustand greifen die Raststege 10-21 in die nutartigen Vertiefungen 2-21 ein, wodurch eine formschlüssige ortsfeste Fixierung der Flasche 2 in der Schiene 10 erfolgt. Die während des Einsetzens der Flasche 2 leicht ausgespreizten Wandungen der Aufnahmeschuhe 10-2 kehren durch ihre Elastizität von selbst in ihre Ausgangsposition zurück, sobald die Raststege 10-21 reversibel in die nutartigen Vertiefungen 2-21 eingreifen, wodurch stets die ortsfeste gewünschte Position der Flasche 2 gewährleistet ist.

Es ist wie bereits zum Stand der Technik erläutert vorgesehen, dass der Imker an der Imkerei die Befüllung der Flasche S2 mit Ameisensäure 60% ad.us.vet. vornimmt und die Flasche mit dem Deckel S5 verschließt. Ferner ist der Transport der Flasche S2 zum Bienenstand vorgesehen, worauf das Anschrauben des Auslaufs S6-3 mithilfe einer Überwurfmutter S6-1 an der Flasche S2 nach entsprechender Entfernung des Deckels S5 erfolgt. In diesem Moment wird der Deckel S5 vorrübergehend nicht mehr benötigt.

Erfindungsgemäß weist die Schiene 10 zur Unterbringung des Deckels S5 der neuartigen Flasche 2 eine Deckelaufnahme 10-3 auf, die (vergleiche Figuren 4A und 5B) im Zusammenbauzustand der Verdunstereinheit 100 in dem Wabenleerrähmchen LR auf der Oberseite der Schiene 10 angeordnet ist. Die Innenkontur der als umlaufender Stegrand ausgebildeten Deckelaufnahme 10-3 korrespondiert mit der Außenkontur des Deckels S5. Ferner weist die Schiene 10 als weiteres technisches Merkmal bereits mindestens eine Öffnung 10-4 auf, die ebenfalls zu ihrer Verstärkung mit einem umlaufenden Stegrand ausgebildet ist. In die mindestens eine Öffnung 10-4 ist unter Vorgabe der Befestigungsstelle/n (vergleiche Figur 4B) ein Befestigungsglied, insbesondere eine Schraube einsetzbar, die in den unterhalb der Schiene 10 liegenden Träger, insbesondere den Unterträger LR-UT des Wabenleerrähmchens LR einschraubbar ist. Dadurch ist die Verdunstereinheit 100 im Zusammenbauzustand mit einem Wabenleerrähmchen LR reversibel verbunden. Es wird deutlich, dass die Schiene 10 der Verdunstereinheit 100 (ohne die eingesetzte Flasche 2) über das mindestens eine Befestigungsglied sehr leicht und schnell in dem Wabenleerrähmchen LR montierbar ist. Nach der Montage der Schiene 10 erfolgt der Zusammenbau der Verdunstereinheit 100 im Wabenleerrähmchen LR folgendermaßen.

Folgender erfindungsgemäßer Gebrauch unter Verwendung von herkömmlichen Wabenleerrähmchen LR ist gemäß den Figuren 4A bis 5B in einer Zusammenschau vorgesehen:
1. An der Imkerei: Befüllung der Flasche 2 mit Ameisensäure 60% ad.us.vet. und Verschluss mit dem Deckel S5.
2. Transport der Flasche 2 zum Bienenstand.
3. Montage der Schiene 10 an einem Unterträger LR-UT des Wabenleerrähmchens LR, insbesondere durch Verschraubung der Schiene 10 an dem Unterträger LR-UT (vergleiche die Figuren 6A und 6B oder die Figuren 11 und 12) über die vorbereiteten Öffnungen 10-4.
4. Entfernung des Deckels S5 von der Flasche 2 und Einsetzen des Deckels S5 in die Deckelaufnahme 10-3 der Schiene 10.
5. Anschrauben des Auslaufs S6-3 mit dem Fuß 6-2 mithilfe der Überwurfmutter S6-1 an dem Aufschraubgewinde S2-1 der Flasche 2.
6. Auswahl der Dochtkarte S8 je nach Beutentyp und weiteren Randparametern, die ausgewählte Dochtkarte S8 in den Auslauf S6-3 der Aufschraubeinheit 6 stecken und den Dochthalter S4 montieren.
7. Einsetzen der Vertiefungen 2-21 der Flasche 2 in die Aufnahmeschuhe 10-2 der Schiene 10 und Verrastung der Raststege 10-21 in den Vertiefungen 2-21 der Flasche 2.

Dieser Gebrauch der erfindungsgemäßen Verdunstereinheit 100 ist vorgesehen, sofern kein Verdunstungsvlies S9 zur Beeinflussung der Verdunstungsleistung zum Einsatz kommt. Die Vorgehensweise bei der Verwendung eines Verdunstungsvlieses S9 wird noch erläutert.

Die Verdunstereinheit 100 ist Bestandteil von modularen Verdunstersystemen, welches erfindungsgemäß die Verdunstereinheit 100 und eines der erfindungsgemäßen Standard-Wabenleerrähmchen LR', LR" oder die Verdunstereinheit und eine herkömmliches Wabenleerrähmchen LR umfassen, welche auf die Bedürfnisse der mit unterschiedlichen Beutentypen arbeitenden Imker abgestimmt ist und welches in Kombination mit der Verdunstereinheit 100 zum Einsatz gebracht werden könne, wie nachfolgend ebenfalls detailliert erläutert wird.

Zunächst wird anhand der Figuren 6A bis 12 ein erstes Standard-Verdunstersystem V, LR' erläutert, welches mehrteilige Standard-Wabenleerrähmchen LR' und die erfindungsgemäße Verdunstereinheit 100 umfasst.

Im Zusammenhang mit den Figuren 13 bis 14B werden die Unterschiede der Standard-Verdunstersysteme V, LR'; V, LR" erläutert, die entweder das mehrteilige Standard-Wabenleerrähmchen LR' und die Verdunstereinheit 100 (V, LR') oder als zweites Standard-Verdunstersystem V, LR" ein einteiliges Standard-Wabenleerrähmchen LR" und die Verdunstereinheit 100 umfassen.

Erstes Standard-Verdunstersystem V, LR':
Die Figur 6A zeigt das Standard-Verdunstersystem V, welches das mehrteilige Standard-Wabenleerrähmchen LR' und die erfindungsgemäße Verdunstereinheit 100 umfasst.

Die Verdunstereinheit 100 des Verdunstersystems V ist gemäß den Figuren 4A bis 5B in einer parallelperspektivischen Ansicht schräg von oben gezeigt, wobei die Ansicht gemäß der Figur 6A (vergleiche auch Figuren 7A und 8A) in der Gebrauchslage des Standard-Wabenleerrähmchens LR' in der Bienenbeute BB, die den Bienen abgewandte Seite zeigt.

Die Figur 6B zeigt das Standard-Wabenleerrähmchen LR' gemäß Figur 6A mit einer vergrößerten Detaildarstellung einer Verbindungsstelle zwischen einem Oberträger LR-OT' und einem Seitenträger LR-ST' des Wabenleerrähmchens LR'.

Das Standard-Verdunstersystem V umfasst ein aus vier Einzelträgern LR-OT', LR-UT' und LR-ST', LR-ST' bestehendes Standard-Wabenleerrähmchen LR', welche in vorteilhafter Weise an dafür vorgesehenen Verbindungstellen einfach miteinander verbindbar sind, wobei die Einzelträger LR-OT', LR-UT' und LR-ST', LR-ST' spezifische Vorkehrungen aufweisen, die eine Kompatibilität mit der Verdunstereinheit 100 und/oder einem Schutzelement, insbesondere einer Schutzgaze 11 oder einem nicht dargestellten Schutzgitter und/oder einem Verdunstungsvlies S9 gewährleisten.

Außerdem sind einige Einzelträger, insbesondere der Oberträger LR-OT' und die Seitenträger LR-ST', LR-ST' derart ausgebildet, sodass eine Anordnung des Standard-Wabenleerrähmchens LR' des erfindungsgemäßen Standard-Verdunstersystems V, LR' in weiterer vorteilhafter Weise im Unterschied zu den bisherigen Wabenleerrähmchen LR aus dem Stand der Technik in verschiedenen Beutentypen möglich ist, wie nachfolgend erläutert wird.

Zuvor wird in einer Zusammenschau auf die Figuren 6A, 6B und die Figuren 7A, 7B sowie auf die parallelperspektivischen Darstellungen des Zusammenbauzustandes des Standard-Verdunstersystems V, LR' gemäß den Figuren 8A, 8B verwiesen, wobei die Figur 7A eine parallelperspektivische Ansicht schräg von unten auf das in der Gebrauchslage des Standard-Wabenleerrähmchens LR' in einer Bienenbeute BB den Bienen abgewandten Seite zeigt, wobei die Verdunstereinheit 100 noch nicht vollständig montiert ist. Die Figur 7B zeigt das Standard-Verdunstersystem V, LR' gemäß den Figuren 6A und 7A in einer parallelperspektivischen Ansicht von seiner Rückseite.

Das Standard-Wabenleerrähmchen LR' weist erfindungsgemäß den Oberträger LR-OT' und einen Unterträger LR-UT' sowie die zwei Seitenträger LR-ST' auf, die vorzugsweise über Rastverbindungen miteinander zu dem Standard-Wabenleerrähmchen LR' verbindbar sind.

Im in den Figuren 6A bis 8B gezeigten Ausführungsbeispiel weisen die beiden Seitenträger LR-ST' endseitig Rastnasen a auf, die in endseitigen Rastaufnahmen b des Oberträgers LR-OT' und des Unterträgers LR-UT' einrastbar sind, sodass die Einzelträger LR-OT', LR-UT' und die Seitenträger LR-ST', LR-ST' zu dem Standard-Wabenleerrähmchen LR' verrastet oder verclipst werden können.

Es versteht sich, dass die beiden Seitenträger LR-ST' endseitig Rastaufnahmen b und der Oberträger LR-OT' sowie der Unterträger LR-UT' in umgekehrter Weise zu dem gezeigten Ausführungsbeispiel entsprechend endseitig Rastnasen a aufweisen können.

Der Oberträger LR-OT' weist ferner jeweils endseitig in Längsrichtung X gesehen Nasen c, sogenannte Längsnasen auf, die den Oberträger LR-OT' beidseitig um je eine vorgebbare Nasenlänge verlängern.

Dadurch ist das Standard-Wabenleerrähmchen LR' mittels der Unterseite der Nasen c in einen in Längsrichtung X des Oberträgers LR-OT' gesehen gebräuchlichsten Beutentyp auf dafür vorgesehenen randseitigen Auflagerelementen innerhalb der Vollzargen VZ des gebräuchlichsten Beutentyps aufsetzbar, wobei die Gesamtlänge aus der Länge (Außenmaß = 370 mm) des Oberträgers LR-OT' und den Überlängen der Längsnasen c (beispielsweise je 10 mm) auf die Abstandsbreite der Auflagerelemente des derzeit gebräuchlichsten Bienenbeutentyps "Deutsch-Normal" abgestimmt ist.

Mit anderen Worten, die Längsnasen c des Oberträgers LR-OT' sind in breiteren ebenfalls gebräuchlichen Beutentypen, wie beispielsweise "Dadant"-Beuten oder "Zander"-Beuten oder "Langstroth"-Beuten auf dafür vorgesehene randseitige Auflagerelemente innerhalb der Vollzargen VZ des Beutentyps nicht aufsetzbar.

Damit die Standard-Wabenleerrähmchen LR' in breiteren ebenfalls sehr gebräuchlichen Beutentypen, wie beispielsweise "Dadant"-Beuten oder "Zander"-Beuten oder "Langstroth"-Beuten einsetzbar sind, werden zwei weitere Ausgestaltungen vorgeschlagen.

Bei einer ersten Ausgestaltung wird mindestens eine Längsnase c mit einer auf ein gewünschtes Maß kürzbaren Überlänge versehen. Dadurch ist das Standard-Wabenleerrähmchen LR' mittels der Unterseite der Nasen c - in Längsrichtung X des Oberträgers LR-OT' gesehen - auch in breiteren Beutentypen auf dafür vorgesehene randseitige Auflagerelemente innerhalb der Vollzargen VZ aufsetzbar, wobei die Gesamtlänge aus der Länge (Außenmaß = 370 mm) des Oberträgers LR-OT' und der einen Längsnase sowie der Längsnase mit der kürzbaren Überlänge auf die Abstandsbreite der Auflagerelemente des derzeit gebräuchlichsten Bienenbeutentypen "Dadant"-Beuten oder "Zander"-Beuten oder "Langstroth"-Beuten oder "Deutsch-Normal" abgestimmt ist.

Die Gesamtlänge setzt sich somit aus der Länge (Außenmaß = 370 mm) des Oberträgers LR-OT', einer Überlänge = 10 mm einer Längsnase c und mindestens einen kürzbaren Überlänge der anderen Längsnase 100 mm zusammen und beträgt somit beispielsweise insgesamt 480 mm. Die Längsnase c mit der kürzbaren Überlänge kann an die Auflagebreite der Auflagerelemente der gebräuchlichsten Bienenbeutentypen "Dadant"-Beuten oder "Zander"-Beuten oder "Langstroth"-Beuten oder "Deutsch-Normal" abgestimmt werden, indem die Längsnase c mit der kürzbaren Überlänge abgeschnitten wird.

Bei einer zweiten Ausgestaltung weisen die Seitenträger LR-ST' ferner jeweils einendseitig und beidseitig quer zur Längsrichtung X gesehen Nasen d, sogenannte Quernasen auf, welche die Tiefe T (Trägerbreite) der Seitenträger LR-ST' beidseitig in Y-Richtung verbreitern. Somit weisen die Seitenträger LR-ST' vier Quernasen d auf. Die Unterseiten der Quernasen d können in vorteilhafter Weise in die in X-Richtung gesehen breiteren gebräuchlichen Beutentypen über die Unterseiten der Quernasen d derart eingehängt werden, sodass das Standard-Wabenleerrähmchen LR' mit der einen Seite mittels zwei Quernasen d - in Y-Richtung gesehen - auf einer Beutenwand der jeweilige Bienenbeute BB und mit der anderen Seite mittels den zwei gegenüberliegenden Quernasen d - ebenfalls in Y-Richtung gesehen - auf einem benachbarten Wabenrähmchen R oder einem benachbarten Wabenleerrähmchen LR aufliegt.

Die Standard-Wabenleerrähmchen LR' können auch auf der einen Seite - in Y-Richtung gesehen - mittels zwei Quernasen d auf einem benachbarten Wabenrähmchen oder Wabenleerrähmchen und mit der anderen Seite - in Y-Richtung gesehen - mittels der zwei gegenüberliegenden Quernasen d auf einem benachbarten Wabenrähmchen R oder einem benachbarten Wabenleerrähmchen LR aufliegen.

Es versteht sich, dass es möglich ist die Längsnasen c an den Seitenträgern LR-ST' und die Quernasen d an dem Oberträger LR-OT' vorzusehen.

Die Ausgestaltungen der Längsnasen c und Quernasen d können miteinander in Kombination ausgeführt werden.

Wesentlich ist, dass durch die Überlängen beziehungsweise die mindestens eine kürzbare Überlänge der Längsnasen c eine passgenaue Einhängung des Wabenleerrähmchens LR' - in Längsrichtung des Oberträgers LR-OT' gesehen - in die hinsichtlich der Abmessungen derzeit gebräuchlichsten Beutentypen möglich ist, während die Quernasen d eine Einhängung des Wabenleerrähmchens LR' - in Y-Richtung gesehen - universell ebenfalls in herkömmliche Beutentypen unabhängig von deren Abmessungen in Längsrichtung X des Oberträgers LR-OT' ermöglichen.

Aus den Figuren 7A und 7B wird insbesondere deutlich, dass in einer bevorzugten Ausgestaltung ein Schutzelement, insbesondere eine Schutzgaze 11 oder ein Schutzgitter (nicht dargestellt) und/oder das Verdunstungsvlies S9 in das Standard-Verdunstersystem V, LR' integriert werden kann.

Folgender Gebrauch ist unter Verwendung des Standard-Wabenleerrähmchens LR' gemäß den Figuren 4A bis 5B und den Figuren 6A bis 8B in einer Zusammenschau vorgesehen, wenn zur Beeinflussung der Verdunstungsleistung ein Verdunstungsvlies S9 und zum Schutz der Bienen eine Schutzgaze 11 zum Einsatz kommt.
1. An der Imkerei: Befüllung der Flasche 2 mit Ameisensäure 60% ad.us.vet. und Verschluss mit dem Deckel S5.
2. Transport der Flasche 2 zum Bienenstand.
3. Klick- oder Clips-Montage des mehrteiligen Standard-Wabenleerrähmchens LR' aus den Einzelträgern LR-OT', LR-UT' und LR-ST', LR-ST', wie zuvor erläutert.
4. Anbringung des Verdunstungsvlieses S9 und der Schutzgaze 11 zwischen Oberträger LR-OT' und Unterträger LR-UT', wie noch erläutert wird.
5. Montage der Schiene 10 an dem Unterträger LR-UT' des montierten, mehrteiligen Standard-Wabenleerrähmchens LR', insbesondere durch Verschraubung der Schiene 10 an dem Unterträger LR-UT' (vergleiche die Figuren 7A und 7B und/oder die Figuren 11 und 12) über die in der Schiene 10 vorbereiteten Öffnungen 10-4.
6. Entfernung des Deckels S5 von der Flasche 2 und Einsetzen des Deckels S5 in die Deckelaufnahme 10-3 der Schiene 10, gemäß Figur 7A.
7. Anschrauben des Auslaufs S6-3 mit dem Fuß 6-2 mithilfe der Überwurfmutter S6-1 an dem Aufschraubgewinde S2-1 der Flasche 2.
8. Auswahl der Dochtkarte S8 je nach Beutentyp und weiteren Randparametern und die ausgewählte Dochtkarte S8 in den Auslauf S6-3 der Aufschraubeinheit 6 stecken und den Dochthalter S4 montieren.
9. Einsetzen der Vertiefungen 2-21 der Flasche 2 in die Aufnahmeschuhe 10-2 der Schiene 10 und Verrastung der Raststege 10-21 in den Vertiefungen 2-21 der Flasche 2 gemäß den Figuren 6A und 8A.

Das mehrteilige Standard-Wabenleerrähmchen LR' und somit das Standard-Verdunstersystem V, LR' umfasst weitere technische Merkmale, insbesondere Vorkehrungen zur Anbringung des Verdunstungsvlieses S9 und der Schutzgaze 11 zwischen Oberträger LR-OT' und Unterträger LR-UT'. Diese weiteren technischen Merkmale können grundsätzlich auch bei einem einteiligen Standard-Wabenleerrähmchen LR" eingesetzt werden.

Die Figuren 6A und 6B, die Figuren 8A und 8B sowie die Figuren 9A und 9B zeigen eine erste Ausführungsvariante eines Befestigungsmittels zur Befestigung der flexiblen Schutzgaze 11 und des flexiblen Verdunstungsvlieses S9 an der bienenabgewandten Seite des Standard-Wabenleerrähmchens LR' in der Offenposition I und in der Schließposition II des Befestigungsmittels.

Auf der Oberseite des Oberträgers LR-OT' und der Unterseite des Unterträgers LR-UT' sind bei dieser ersten Ausführungsvariante bewegliche Klapp-Klemmstege f angeordnet. Die flexible Schutzgaze 11 und das Verdunstungsvlies S9 werden in der Offenposition I aller Klapp-Klemmstege f zunächst randseitig auf der Unterseite des Unterträgers LR-UT' flächig angelegt, wonach alle Klapp-Klemmstege f des Unterträgers LR-UT' in die Schließposition II gebracht werden. Der Oberträger LR-OT' und der Unterträger LR-UT' sind dabei vorzugsweise u-förmig ausgebildet, sodass in den gegenüberliegenden Schenkeln des "U" einseitig ein Scharnier und gegenüberliegend eine Rasteinrichtung e ausbildbar ist, die aus einem Klemmschlitz und/oder einer Rastnase a ausgebildet ist, wie in den Figuren 9A, 9B schematisch dargestellt ist.

Die Figur 9A zeigt die Offenposition I eines Klapp-Klemmsteges f und die Figur 9B die Schließposition II des Klapp-Klemmsteges f sowie das Scharnier und die gegenüberliegende Rasteinrichtung e, gebildet aus der Rastnase a und dem Klemmschlitz.

Bevorzugt dient zur Vorfixierung der Schutzgaze 11 und des Verdunstungsvlieses S9 ferner mindestens ein Fixierungselement h, welches auf der Unterseite des Unterträgers LR-UT' angeordnet ist. Dabei ist bevorzugt zumindest jedem Klapp-Klemmsteg f ein Fixierungselement h zugeordnet, welches in der Schließposition II des Klapp-Klemmsteges f den Klapp-Klemmsteg f durchgreift, wie in Figur 9B gezeigt ist.

Dadurch kann die Schutzgaze 11 und das Verdunstungsvlies S9 einfach auf der Unterseite des Unterträgers LR-UT' durch Einstechen des randseitigen Materials auf den Spitzen der Fixierungselemente h vorfixiert werden. Anschließend werden die Klapp-Klemmstege f in die Schließposition II gebracht, wonach die flexible Schutzgaze 11 und das flexible Verdunstungsvlies S9 noch mindestens einmal um den Unterträger LR-UT' herumgewickelt wird.

Daran anschließend wird die Schutzgaze 11 und das Verdunstungsvlies S9 auf der Rückseite des Standard-Wabenleerrähmchens LR' aufgespannt und bei offenen Klapp-Klemmstegen f analog zu der bisher beschriebenen Vorgehensweise an mindestens einem Fixierungselement h vorzugsweise mehreren Fixierungselementen h vorfixiert, welche/s auf der Oberseite des Oberträgers LR-OT' des Standard-Wabenleerrähmchens LR' angeordnet ist/sind.

Bevorzugt ist auch dort zumindest jedem Klapp-Klemmsteg f ein Fixierungselement h zugeordnet. Danach werden die auf der Oberseite des Oberträgers LR-OT' angeordneten Klapp-Klemmstege f in die Schließposition II gebracht, wie Figur 9B verdeutlicht.

Im Ergebnis ist die Schutzgaze 11 und das Verdunstungsvlies S9 am Oberträger LR-OT' und am Unterträger LR-UT' vorfixiert und fixiert und auf der Oberseite des Unterträgers LR-UT' ist durch das Umwickeln als oberste Schicht das Verdunstungsvlies S9 angeordnet, wodurch auftreffende Ameisensäure in bekannter Weise von dem Verdunstungsvlies S9 aufgenommen und durch die temperaturabhängige Verdunstung wieder abgegeben wird.

Die Abmaße der flexiblen Schutzgaze 11 sind derart gewählt, dass die Schutzgaze 11 im aufgespannten Zusammenbauzustand das Standard-Wabenleerrähmchen LR' auf der den Bienen zugewandten Seite vollständig abdeckt.

Damit die Schutzgaze 11 um den Unterträger LR-UT' herumgewickelt werden kann, weisen die Seitenträger LR-ST' Rücksprünge i auf, die das Umwickeln der Schutzgaze 11 derart ermöglichen, dass die Schutzgaze 11 im Zusammenbauzustand das Standard-Wabenleerrähmchen LR' auf der den Bienen zugewandten Seite vollständig abdeckt.

Erst nach der Anordnung der Schutzgaze 11 und des Verdunstungsvlieses S9 wird die Verdunstereinheit 100 montiert, wie noch erläutert wird.

Um eine gemeinsame Anbringung der Schutzgaze 11 und des Verdunstungsvlieses S9 zu vereinfachen, wird die Schutzgaze 11 und das Verdunstungsvlies S9 in einer optionalen Ausführungsform randseitig und/oder teilflächig oder vollflächig durch Schweißen, Kleben oder mechanisch oder kraftschlüssig zusammengefügt. Das Verdunstungsvlies S9 sowie die Schutzgaze als Schutzelement 11 weisen Bestandteile auf, die es erlauben, durch Wärmewirkung eine Verbindung zwischen den Bauteilen herzustellen. Das Schutzelement 11, insbesondere die Schutzgaze kann somit mit dem Verdunstungsvlies S9 und/oder mit dem Standard-Wabenleerrähmchen LR' verbunden werden.

Durch die gewählte Fügeverbindung entsteht ein einteiliges flexibles Bauteil 11/S9 aus Schutzgaze 11 und Verdunstungsvlies S9, welches komfortabler anbringbar ist, da die Bauteile relativ zueinander nicht verrutschen können.

Die Figur 10 zeigt ergänzend eine zweite Ausführungsvariante eines Befestigungsmittels zur Befestigung der Schutzgaze 11 und des Verdunstungsvlieses S9 an der Bienen abgewandten Seite des Standard-Wabenleerrähmchens LR' in der Fixierungsposition der Schutzgaze 11 und des Verdunstungsvlieses S9 durch das Befestigungsmittel.

In der zweiten Ausführungsvariante ist das Befestigungsmittel ein nicht mit dem Standard-Wabenleerrähmchen LR' verbundenes Klemmstück g, welches auf der Unterseite des Unterträgers LR-UT' und/oder der Oberseite des Oberträgers LR-OT' zwischen den gegenüberliegenden Schenkeln des "U" klemmbar ist. Das Klemmstück g greift im Zusammenbauzustand hinter die Rastnase der Rasteinrichtung e und in den Klemmschlitz ein.

Das Klemmstück g ist vorzugsweise kreuzförmig, wodurch sich gegenüberliegende Stirnflächen ergeben, die im Zusammenbauzustand an den Innenflächen der Schenkel passgenau anliegen. Außerdem bildet sich in der Gebrauchslage des Klemmstücks g an der Schutzgaze 11 und/oder dem Verdunstungsvlies S9 eine große Anlagefläche aus, die eine komfortable Positionierung und/oder Fixierung der Schutzgaze 11 und des Verdunstungsvlieses S9 ermöglicht. Schließlich bewirkt die kreuzförmige Form eine angenehme Handhabung. In vorteilhafter Weise ist das Klemmstück g nämlich innen hohl und damit federnd ausgebildet, damit es einfach geklemmt werden kann.

Es wird darauf hingewiesen, dass die Befestigungsmittel f, g allein oder in Kombination einsetzbar sind, wobei die Fixierungselemente h zusätzlich in jeder der möglichen Kombinationen Verwendung finden können.

In einer anderen nicht dargestellten Ausgestaltung ist das Schutzelement keine flexible Schutzgaze, sondern ein festes nicht flexibles Schutzgitter. Das Schutzgitter wird unabhängig von dem Verdunstungsvlies oder gemeinsam mit dem Verdunstungsvlies an dem Standard-Wabenleerrähmchen LR' angeordnet. Bei einer unabhängigen Anordnung wird das Verdunstungsvlies S9 wie zuvor beschrieben befestigt und das Schutzgitter separat auf der den Bienen zugewandten Seite fixiert, wozu auf dieser Seite des Standard-Wabenleerrähmchen LR' entsprechende Fixierungsmittel (nicht dargestellt) vorgesehen sind.

Bei einer gemeinsamen Anordnung des Schutzgitters und des Verdunstungsvlieses S9 an dem Standard-Wabenleerrähmchen LR' werden das Schutzgitter und das Verdunstungsvlies S9 teilflächig oder vollflächig zusammengefügt, insbesondere verschweißt, wobei das Verdunstungsvlies S9 einen oberen und unteren Rand bildet, der eine Befestigung des mit dem Schutzgitter verbundenen Verdunstungsvlieses S9 erlaubt. Der untere Rand ist länger als der obere Rand, sodass das Verdunstungsvlies S9 mit dem unteren Rand um den Unterträger LR-UT' gewickelt und der obere Rand um den Oberträger LR-OT' gelegt werden kann. Zur Montage des Schutzgitters und des Verdunstungsvlieses S9 wird, wie oben zur Schutzgaze 11 beschrieben, analog vorgegangen.

Die Abmaße des Schutzgitters sind derart gewählt, dass die Schutzgaze 11 im aufgespannten Zusammenbauzustand das Standard-Wabenleerrähmchen LR' auf der den Bienen zugewandten Seite vollständig abdeckt.

Abschließend wird anhand der Figuren 11 und 12 noch erläutert, wie die Verdunstereinheit 100 komfortabel und passgenau auf der Oberseite des Unterträgers LR-UT' montiert wird, nachdem die Schutzgaze 11 und/oder das Verdunstungsvlies S9 wie bereits erläutert angebracht worden ist/sind.

### Zwei Ausgestaltungsvarianten werden nachfolgend erläutert:

In einer ersten Ausgestaltungsvariante weist mindestens einer der Seitenträger LR-ST' einen gegenüber der Längserstreckung des Seitenträger LR-ST' orthogonal abgehenden Positioniersteg 12 auf, der in den Figuren 11 und 12 gezeigt ist.

Dieser Positioniersteg 12 greift in eine U-förmige Positionieraufnahme 10-5 ein, die zwischen den Wandungen des Aufnahmeschuhs 10-2 der Schiene 10 ausgebildet ist. Die Innenkontur der Positionieraufnahme 10-5 ist im Zusammenbauzustand zu dem Positioniersteg 12 gerichtet und weist die Außenkontur des Positioniersteges 12 auf, wodurch die Verdunstereinheit 100 im Zusammenbauzustand in zwei Raumrichtungen, nämlich in X-Richtung und in Y-Richtung positionierbar ist. Die dritte Raumrichtung z entspricht der Höhe des Positionierstegs 12 und der Positionieraufnahme 10-5 gegenüber der Oberseite des Unterträgers LR-UT', die ebenfalls entsprechend angepasst sind, wodurch im Zusammenbauzustand eine eindeutige Lagefixierung der Schiene gegenüber dem Seitenträger LR-ST' und dem Unterträger LR-UT' erreicht wird.

In einer zweiten Ausgestaltungsvariante werden auch auf der Oberseite des Unterträgers LR-UT' mindestens zwei Fixierungselemente h zur Fixierung der Schutzgaze 11 und/oder des Verdunstungsvlieses S9 derart in einem Abstand in Y-Richtung (quer zur Längserstreckung des Unterträgers LR-UT') gegenüberliegend angeordnet, dass in dem vorgesehenen Abstand zwischen den Fixierungselementen h die Schiene 10 einsetzbar ist, wodurch sich eine weitere Möglichkeit zu Positionierung der Schiene 10 der Verdunstereinheit 100 ergibt, die bei der Montage und im Zusammenbauzustand zudem eine Fixierung der Schutzgaze 11 und/oder des Verdunstungsvlieses S9 auf der Oberseite des Unterträgers LR-UT' bewirkt. Wie in der Figur 12 gezeigt, können die Fixierungselemente h außen an der Schiene und/oder innen an der Schiene 10 angeordnet sein, um eine eindeutige Positionierung der Schiene 10 der Verdunstereinheit 100 an der Oberseite des Unterträgers LR-UT' zu bewirken.

Durch die Positionierung der Schiene 10 mithilfe einer der Ausgestaltungsvarianten oder beider Ausgestaltungsvarianten in Kombination, ist in vorteilhafter Weise eine passgenaue Befestigung unter der Voraussetzung der entsprechenden Positionierung der Schiene 10, insbesondere durch Verschraubung von Befestigungsgliedern über die Öffnungen 10-4 in der Schiene 10 möglich, denen in dem Unterträger LR-UT' in vorteilhafter Weise vorgesehene Öffnungen 13 (vergleiche Figur 8A) ortsgleich zugeordnet sind.

### Zweites Standard-Verdunstersystem V, LR":

Gemäß den nachfolgenden Erläuterungen zu den Figuren 13 bis 14B wird insbesondere auf die Gemeinsamkeiten und die Unterschiede des zweiten Standard-Verdunstersystems V; LR" gegenüber dem bereits ausführlich erläuterten ersten Standard-Verdunstersystem V, LR' eingegangen.

Das zweite Standard-Verdunstersystem V, LR" umfasst die Verdunstereinheit 100 und als wesentlichen Unterschied zu dem ersten Standard-Verdunstersystem V-LR' ein einteiliges Standard-Wabenleerrähmchen LR".

Die Figur 13 zeigt das einteilige Standard-Wabenleerrähmchen LR" und die Verdunstereinheit 100 im Zusammenbauzustand in einer parallelperspektivischen Ansicht schräg von oben.

Das einteilige Standard-Wabenleerrähmchen LR" umfasst ebenfalls zumindest einen Oberträger LR-OT" und einen Unterträger LR-UT" sowie zwei Seitenträger LR-ST".

In einer ersten Ausführungsvariante ist, wie in den Figuren 13 bis 14B dargestellt, auf einer Rückseite des einteiligen Standard-Wabenleerrähmchens LR" ein gitterartiges bienenundurchlässiges Schutzelement 11 einstückig ausgebildet. In diesem Fall wird nachträglich bevorzugt beim Hersteller bereits das Verdunstungsvlies S9 aufgebracht.

In einer zweiten Ausführungsvariante ist auf einer Rückseite des Standard-Wabenleerrähmchens LR" bevorzugt lediglich eine gitterartige das Standard-Wabenleerrähmchen LR" stabilisierende Verstrebung (nicht dargestellt) ausgebildet. Erst nachträglich wird ein bienenundurchlässiges Schutzelement 11 an der gitterartigen Verstrebung und/oder dem einteiligen Standard-Wabenleerrähmchen LR" angebracht, welches bevorzugt vorher mit dem Verdunstungsvlies S9 verbunden, insbesondere verschweißt worden ist.

Wie durch Vergleich der Figur 13 mit den Figuren 14A und 14B deutlich wird, ist der Oberträger LR-OT" über ein nicht näher dargestelltes Filmscharnier an den Seitenträgern LR-ST" angelenkt, wodurch der Oberträger LR-OT" um eine Klappachse X1 aus einer Offenposition I in eine Schließposition II bringbar und in der Schließposition II mit den Seitenträgern LR-ST" verbindbar, insbesondere verrastbar ist.

Zudem wird in den Figuren 13 bis 14B verdeutlicht, dass das einteilige Standard-Wabenleerrähmchen LR" zwei Seitenträger LR-ST" aufweist, die gegenüber dem Oberträger LR-OT" und dem Unterträger LR-UT" schräg angeordnet sind.

Ein erster Abstand zwischen den Seitenträgern LR-ST" im Bereich des Oberträgers LR-OT" ist dabei geringfügig größer als ein zweiter Abstand im Bereich des Unterträgers LR-UT", wodurch mehrere einteilige Standard-Wabenleerrähmchen LR" bei einem, wie zuvor erläutert, in seiner Offenposition I angeordneten Oberträger LR-OT" ineinander stapelbar sind.

Die Verdunstereinheit 100 kommt, wie ebenfalls durch die Figuren 13 bis 14B deutlich wird, unverändert zum Einsatz und kann, wie zu dem ersten Standard-Verdunstersystem V; LR' erläutert, auf der Oberseite des Unterträgers LR-UT" montiert werden, wobei die bereits zu dem ersten Standard-Verdunstersystem V, LR' beschriebenen Details hinsichtlich der Anordnung der Verdunstereinheit 100 auf dem Unterträgers LR-UT" in den Figuren 13 bis 14B nicht noch einmal dargestellt sind.

Die Stapelbarkeit des einteiligen Standard-Wabenleerrähmchens LR" wird in der parallelperspektivischen Vorderansicht gemäß 14A (mit noch nicht montierter Verdunstereinheit 100) schräg von oben auf die ineinander gestapelten Standard-Wabenleerrähmchen LR" deutlich, wobei der Oberträger LR-OT" bereits um die Klappachse X1 in die Schließposition II geklappt ist. Die Oberträger LR-OT" der anderen einteiligen Standard-Wabenleerrähmchen LR" befinden sich hinsichtlich des nicht um das Filmscharnier geklappten Oberträgers LR-OT" in der Offenposition I, wodurch gemeinsam mit der schrägen Ausgestaltung der Seitenträger LR-ST" die Stapelbarkeit der Standard-Wabenleerrähmchen LR" bewirkt wird.

Figur 14B zeigt die Rückseite des zweiten Standard-Verdunstersystems V, LR" zur Verdeutlichung der Stapelbarkeit des erfindungsgemäßen einteiligen Standard-Wabenleerrähmchen LR" in einer parallelperspektivischen Rückansicht schräg von oben.

Gemäß der Darstellung der Figuren 14A und 14B ist als erste Ausführungsvariante vorgesehen, auf einer Rückseite des einteiligen Standard-Wabenleerrähmchens LR" ein gitterartiges bienenundurchlässiges Schutzelement 11 einstückig auszubilden. In diesem Fall wird das in Figur 14A gezeigte Verdunstungsvlies S9 nachträglich aufgebracht.

Um die Anbringung des Verdunstungsvlieses S9 zu vereinfachen, wird das Verdunstungsvlies S9 in optionalen Ausführungsformen randseitig und/oder teilflächig oder vollflächig durch Schweißen, Kleben oder mechanisch oder kraftschlüssig mit dem gitterartigen bienenundurchlässigen Schutzelement 11 zusammengefügt. Das Verdunstungsvlies S9 sowie das Schutzelement 11 weisen Bestandteile auf, die es erlauben durch Wärmewirkung eine Verbindung zwischen den Bauteilen herzustellen.

Folgender Gebrauch ist unter Verwendung des einteiligen Standard-Wabenleerrähmchens LR" gemäß den Figuren 13 bis 14B in einer Zusammenschau vorgesehen, wenn zur Beeinflussung der Verdunstungsleistung ein Verdunstungsvlies S9 und zum Schutz der Bienen ein einstückig ausgebildetes Schutzgitter zum Einsatz kommt.
1. An der Imkerei: Befüllung der Flasche 2 mit Ameisensäure 60% ad.us.vet. und Verschluss mit dem Deckel S5.
2. Transport der Flasche 2 zum Bienenstand.
3. Verwendung des vorgefertigten einteiligen Standard-Wabenleerrähmchens LR" aus den Einzelträgern LR-OT", LR-UT" und LR-ST", LR-ST", wie zuvor erläutert.
4. Anbringung des Verdunstungsvlieses S9 wie dargestellt oder das Verdunstungsvlies S9 ist bereits in der Fertigung mit dem bienenundurchlässigen Schutzelement 11, insbesondere dem Schutzgitter verbunden.
5. Montage der Schiene 10 an dem Unterträger LR-UT' des einteiligen Standard-Wabenleerrähmchens LR", insbesondere durch Verschraubung der Schiene 10 an dem Unterträger LR-UT" (analog zu dem ersten Standard-Verdunstersystem V, LR' vergleiche die Figuren 7A und 7B und/oder die Figuren 11 und 12) über die in der Schiene 10 vorbereiteten Öffnungen 10-4.
6. Entfernung des Deckels S5 von der Flasche 2 und Einsetzen des Deckels S5 in die Deckelaufnahme 10-3 der Schiene 10, gemäß Figur 7A.
7. Anschrauben des Auslaufs S6-3 mit dem Fuß 6-2 mithilfe der Überwurfmutter S6-1 an dem Aufschraubgewinde S2-1 der Flasche 2.
8. Auswahl der Dochtkarte S8 je nach Beutentyp und weiteren Randparametern und die ausgewählte Dochtkarte S8 in den Auslauf S6-3 der Aufschraubeinheit 6 stecken und den Dochthalter S4 montieren.
9. Einsetzen der Vertiefungen 2-21 der Flasche 2 in die Aufnahmeschuhe 10-2 der Schiene 10 und Verrastung der Raststege 10-21 in den Vertiefungen 2-21 der Flasche 2 gemäß den Figuren 6A und 8A.

Das einteilige Standard-Wabenleerrähmchen LR" hat den Vorteil, dass es vom Anwender vor dem Gebrauch nicht mehr zusammengebaut werden muss. Durch die Stapelbarkeit ist analog zu dem mehrteiligen Standard-Wabenleerrähmchen LR' ein platzsparender Versand von mehreren einteiligen Standard-Wabenleerrähmchen LR" möglich.

### Bezugszeichen

### Stand der Technik:

- S100: Verdunstereinheit
- S1: Wanne
- S1-1: Sockel
- S2: Flasche (Vorratsbehälter)
- S2-1: Aufschraubgewinde
- S3: Standklammer
- S4: Dochtkartenhalter
- S5: Deckel
- S6: Aufschraubeinheit
- S6-1: Überwurfmutter
- S6-2: Fuß
- S6-3: Auslauf
- S7: Spangen
- S8: Dochtkarte
- S9: Verdunstungsvlies
- LZ: leere Halbzarge
- R: Wabenrähmchen
- LR: Wabenleerrähmchen
- LR-OT: Oberträger
- LR-UT: Unterträger
- LR-ST: Seitenträger
- VZ: Vollzarge
- BB: Bienenbeute
- D: Beutendeckel
- H: Höhe (Außenmaß) eines Wabenleerrähmchens verschiedener Beutentypen
- B: Breite (Außenmaß) eines Wabenleerrähmchens verschiedener Beutentypen
- T: Tiefe eines Wabenleerrähmchens verschiedener Beutentypen
Erfindung:
- V: Verdunstersystem
- 100: Verdunstereinheit
- H-100: Höhe der Verdunstereinheit (H-100 < H-LR)
- B-100: Breite der Verdunstereinheit (B-100 < B-LR)
- T-100: Tiefe der Verdunstereinheit (T-100 < T-LR)
- H-LR: Höhe (Innenmaß) eines herkömmlichen Wabenleerrähmchens LR oder eines Standard-Wabenleerrähmchens LR'; LR"
- B-LR: Breite (Innenmaß) eines herkömmlichen Wabenleerrähmchens LR oder eines Standard-Wabenleerrähmchens LR'; LR"
- T-LR: Tiefe eines herkömmlichen Wabenleerrähmchens LR oder eines Standard-Wabenleerrähmchens LR'; LR"
- 2: Flasche (Vorratsbehälter)
- S2-1: Aufschraubgewinde
- 2-2: Ausnehmungen
- 2-21: Vertiefungen
- S4: Dochtkartenhalter
- S5: Deckel
- 6: Aufschraubeinheit
- S6-1: Überwurfmutter
- 6-2: Fuß
- S6-3: Auslauf
- S8: Dochtkarte
- S9: Verdunstungsvlies
- 10: Befestigungsmittel
- 10-1: Grundträger
- 10-2: Aufnahmeschuhe
- 10-21: Raststege
- 10-3: Deckelaufnahme
- 10-4: Öffnung/en
- 10-5: Positionieraufnahme
- 11: Schutzelement (Schutzgaze oder Schutzgitter)
- 12: Positioniersteg
- 13: Öffnungen
- LR': mehrteiliges Standard-Wabenleerrähmchen
- LR-OT': Oberträger
- LR-UT': Unterträger
- LR-ST': Seitenträger
- LR": einteiliges Standard-Wabenleerrähmchen (stapelbar)
- LR-OT": Oberträger
- LR-UT": Unterträger
- LR-ST": Seitenträger
- LR-OT"; I: Offenposition
- LR-OT"; II: Schließposition
- a: Rastnasen
- b: Rastaufnahmen
- c: Nasen (Längsnasen)
- d: Nasen (Quernasen)
- e: Rasteinrichtung
- f; I: Klapp-Klemmstege (Offenposition)
- f; II: Klapp-Klemmstege (Schließposition)
- g: Klemmstück
- h: Fixierungselement
- i: Rücksprung
- X1: Klappachse
- X: horizontale Richtung
- Y: horizontale Richtung orthogonal zur X-Richtung
- Z: vertikale Richtung orthogonal zur X-Richtung

## Patentansprüche

1. Verdunstereinheit (100) zum Verdunsten von Flüssigkeiten, insbesondere zur Verdunstung von Ameisensäure zur Bekämpfung von Varroamilben in Bienenbeuten (BB), die zumindest einen Vorratsbehälter (2) für die Flüssigkeit, eine die Flüssigkeit aufnehmende und durch Verdunstung abgebende Dochtkarte (S8) und eine die Dochtkarte (S8) aufnehmende Einheit (6) aufweist, wobei die Einheit (6) zur Abgabe der Flüssigkeit an die Dochtkarte (S9) in einem Zusammenbauzustand der Verdunstereinheit (10) mit dem Vorratsbehälter (2) reversibel in Verbindung steht,
**dadurch gekennzeichnet, dass**
die Verdunstereinheit (100) ein schienenartiges Befestigungselement (10) umfasst, in dem der Vorratsbehälter (2) im Zusammenbauzustand reversibel angeordnet ist.

2. Verdunstereinheit (100) nach Anspruch 1,
**dadurch gekennzeichnet, dass**
das Befestigungselement (10) eine Schiene ist, die mindestens einen Aufnahmeschuh (10-2) aufweist, der in einer Gebrauchslage der Verdunstereinheit von einer Oberseite eines sich in Längsrichtung der Schiene (10) erstreckenden Grundträgers (10-1) der Schiene (10) orthogonal abgeht, wobei der Vorratsbehälter (2) reversibel in die Schiene (10) einsetzbar ist.

3. Verdunstereinheit (100) nach Anspruch 2,
**dadurch gekennzeichnet, dass**
der Vorratsbehälter (2) von der Mantelfläche des Vorratsbehälters (2) nach innen abgestellte Ausnehmungen (2-2) aufweist, in die der mindestens eine Aufnahmeschuh (10-2) im Zusammenbauzustand eingreift, sodass der Aufnahmeschuh (10-2) gegenüber der angrenzenden Mantelfläche des Vorratsbehälters (2) zurückgesetzt angeordnet ist.

4. Verdunstereinheit (100) nach Anspruch 2,
**dadurch gekennzeichnet, dass**
die nach innen abgestellten Ausnehmungen (2-2) in der Mantelfläche des Vorratsbehälters (2) jeweils mindestens eine noch weiter nach innen abgestellte Vertiefung (2-21) aufweist, in die im Zusammenbauzustand Raststege (10-21) eingreifen, die auf der zu der Mantelfläche gerichteten Seite, der sich gegenüberliegenden orthogonal von der Oberseite des Grundträgers (10-1) der Schiene (10) abgehenden Wandungen des mindestens einen Aufnahmeschuhs (10-2) angeordnet sind.

5. Verdunstereinheit (100) nach Anspruch 2,
**dadurch gekennzeichnet, dass**
der Grundträger (10-1) der Schiene (10) eine Deckelaufnahme (10-3) aufweist, die orthogonal von der Oberseite des Grundträgers (10-1) der Schiene (10) abgeht und als umlaufender Stegrand ausgebildet ist, deren Innenkontur mit der Außenkontur eines vom Vorratsbehälter (2) abnehmbaren Deckels (S5) korrespondiert.

6. Mehrteiliges Standard-Wabenleerrähmchen (LR'),
**dadurch gekennzeichnet, dass**
das mehrteilige Standard-Wabenleerrähmchen (LR') ein verclipsbares oder verrastbares Wabenleerrähmchen (LR') ist, welches vor einem Zusammenbau aus vier Einzelträgern, einem Oberträger (LR-OT') und einem Unterträger (LR-UT') sowie zwei Seitenträgern (LR-ST') ausgebildet ist, die im Zusammenbauzustand miteinander reversibel über endseitig der Träger (LR-OT', LR-UT', LR-ST') angeordnete miteinander korrespondierende Mittel (a, b) verrastet oder verclipst sind.

7. Einteiliges Standard-Wabenleerrähmchen (LR"),
**dadurch gekennzeichnet, dass**
das einteilige Standard-Wabenleerrähmchen (LR") zumindest aus einem Oberträger (LR-OT") und einem Unterträger (LR-UT") sowie zwei Seitenträgern (LR-ST") und wahlweise aus einem auf einer Rückseite des Rahmens angeordneten gitterartigen Schutzelement (11) einstückig ausgebildet ist, wobei der Oberträger (LR-OT") über ein Filmscharnier an den Seitenträgern (LR-ST") angelenkt ist, wodurch der Oberträger (LR-OT") um eine Klappachse (X1) aus einer Offenposition (I) in eine Schließposition (II) bringbar und mit den Seitenträgern (LR-ST") verrastbar ist.

8. Einteiliges Standard-Wabenleerrähmchen (LR") nach Anspruch 7,
**dadurch gekennzeichnet, dass**
die zwei Seitenträger (LR-ST") gegenüber dem Oberträger (LR-OT") und dem Unterträger (LR-UT") schräg angeordnet sind, so dass ein erster Abstand zwischen den Seitenträgern (LR-ST") im Bereich des Oberträgers (LR-OT") geringfügig größer ist als ein zweiter Abstand im Bereich des Unterträgers (LR-UT"), wodurch mehrere einteilige Standard-Wabenleerrähmchen (LR") bei einem in seiner Offenposition (I) angeordneten Oberträger (LR-OT") ineinander stapelbar sind.

9. Einteiliges und mehrteiliges Standard-Wabenleerrähmchen (LR'; LR") nach Anspruch 6 oder 7,
**dadurch gekennzeichnet, dass**
die Standard-Wabenleerrähmchen (LR'; LR") Nasen (c) mit einer vorgebbaren Nasenüberlänge aufweisen, die das jeweilige Standard-Wabenleerrähmchen (LR'; LR") ausgehend von der Breite (B) des Oberträgers (LR-OT'; LR-OT") zwischen zwei Seitenträgern (LR-ST', LR-ST'; LR-ST", LR-ST") jeweils endseitig um je eine Nasenüberlänge verlängern, sodass das jeweilige Standard-Wabenleerrähmchen (LR'; LR") auf randseitigen Auflagerelementen innerhalb der Vollzargen (VZ) derjenigen Bienenbeuten (BB) aufsetzbar ist, welche die Standard-Wabenleerrähmchen (LR'; LR") mit einer Außenmaß-Mindestbreite (B) = 370 mm zuzüglich den entsprechenden Nasenlängen der Nasen (c) aufnehmen.

10. Einteiliges und mehrteiliges Standard-Wabenleerrähmchen (LR'; LR") nach Anspruch 6 oder 7,
**dadurch gekennzeichnet, dass**
das jeweilige Standard-Wabenleerrähmchen (LR';LR") Nasen (c) aufweist, die das jeweilige Standard-Wabenleerrähmchen (LR'; LR") ausgehend von der Breite (B) des Oberträgers (LR-OT'; LR-OT") zwischen zwei Seitenträgern (LR-ST', LR-ST'; LR-ST", LR-ST") jeweils endseitig um je eine Nasenüberlänge verlängern, wobei mindestens eine der Nasen (c) eine kürzbare Nasenüberlänge aufweist, sodass das jeweilige Standard-Wabenleerrähmchen (LR', LR") durch Einkürzen der kürzbaren Nasenüberlänge auf randseitige Auflagerelemente innerhalb der Vollzargen (VZ) derjenigen Bienenbeuten (BB) aufsetzbar ist, welche die Standard-Wabenleerrähmchen (LR'; LR") mit einer Außenmaß-Mindestbreite (B) = 370 mm zuzüglich der Nasenüberlänge der einen Nase (c) und der gekürzten Nasenüberlänge der anderen Nase (c) aufnimmt.

11. Einteiliges und mehrteiliges Standard-Wabenleerrähmchen (LR') nach Anspruch 6 oder 7,
**dadurch gekennzeichnet, dass**
das jeweilige Standard-Wabenleerrähmchen (LR'; LR") mindestens zwei weitere Nasen (d) aufweist, die das jeweilige Standard-Wabenleerrähmchen (LR'; LR") ausgehend von der Tiefe (T-LR) eines der Träger (LR-OT', LR-UT', LR-ST'; LR-OT", LR-UT", LR-ST") jeweils quer zur Längsrichtung des Standard-Wabenleerrähmchens (LR'; LR") beidseitig verbreitern, sodass das jeweilige Standard-Wabenleerrähmchen (LR', LR") mit der einen Seite des jeweiligen Standard-Wabenleerrähmchen (LR'; LR") mittels der mindestens einen weiteren Nase (d) auf einer Beutenwand einer Bienenbeute (BB) und mit der anderen Seite des jeweiligen Standard-Wabenleerrähmchens (LR'; LR") mittels der mindestens einen anderen weiteren Nase (d) auf einem benachbarten herkömmlichen Wabenrähmchen (R) oder einem benachbarten herkömmlichen Wabenleerrähmchen (LR) oder beidseitig mit der jeweiligen mindestens einen Nase (d) auf jeweils benachbarte herkömmliche Wabenrähmchen (R) oder herkömmliche Wabenleerrähmchen (LR) aufliegt.

12. Einteiliges und mehrteiliges Standard-Wabenleerrähmchen (LR'; LR") nach Anspruch 6 oder 7,
**dadurch gekennzeichnet, dass**
das jeweilige Standard-Wabenleerrähmchen (LR'; LR") Mittel (e, f, g, h) und Vorkehrungen (i) zur Befestigung eines Schutzelementes (11), insbesondere eines Schutzgitters oder einer Schutzgaze und/oder von einem Verdunstungsvlies (S9) aufweist.

13. Einteiliges und mehrteiliges Standard-Wabenleerrähmchen (LR'; LR") nach mindestens einem der Ansprüche 6 bis 12,
**dadurch gekennzeichnet, dass**
das jeweilige Standard-Wabenleerrähmchen (LR'; LR") aus Kunststoff ist.

14. Standard-Verdunstersystem (V, LR'; V, LR") umfassend eine Verdunstereinheit (100) nach mindestens einem der Ansprüche 1 bis 5, welche im Zusammenbauzustand in einem mehrteiligen oder einteiligen Standard-Wabenleerrähmchen (LR'; LR") nach mindestens einem der Ansprüche 6 bis 13 anordbar ist,
wobei die Verdunstereinheit (100) derart dimensioniert ist, dass die Verdunstereinheit (100) im Zusammenbauzustand mittels des schienenartigen Befestigungselementes (10) ohne Überstand in dem den Bauraum vorgebenden Standard-Wabenleerrähmchen (LR'; LR") mit seinen Bauraum-Innenmaßen (H-LR, B-LR, T-LR) anordbar ist, wobei eine Höhe (H-LR) zwischen einem Oberträger (LR-OT'; LR-OT") und einem Unterträger (LR-UT'; LR-UT") und eine Tiefe (T-LR) durch die Trägerbreite der Träger (LR-OT', LR-UT', LR-ST'; LR-OT", LR-UT", LR-ST") und eine Breite (B-LR) zwischen zwei Seitenträgern (LR-ST'; LR-ST") der Standard-Wabenleerrähmchen (LR'; LR") bestimmt ist.

15. Verdunstersystem umfassend eine Verdunstereinheit (100) nach mindestens einem der Ansprüche 1 bis 5, welche im Zusammenbauzustand in einem herkömmlichen Wabenleerrähmchen (LR) anordbar ist,
wobei die Verdunstereinheit (100) derart dimensioniert ist, dass die Verdunstereinheit (100) im Zusammenbauzustand mittels des schienenartigen Befestigungselementes (10) mit einem seitlichen Überstand in dem den Bauraum vorgebenden Wabenleerrähmchen (LR) mit seinen Bauraum-Innenmaßen (H-LR, B-LR, T-LR) anordbar ist, wobei eine Höhe (H-LR) zwischen einem Oberträger (LR-OT) und einem Unterträger (LR-UT) und eine Tiefe (T-LR) durch die Trägerbreite der Träger (LR-OT, LR-UT, LR-ST) und eine Breite (B-LR) zwischen zwei Seitenträgern (LR-ST) des Wabenleerrähmchens (LR) bestimmt ist, wobei der seitliche Überstand in Abhängigkeit der Tiefe (T-LR) der Träger (LR-OT, LR-UT, LR-ST) der verschiedenen herkömmlichen Wabenleerrähmchen (LR) gebildet wird.

16. Standard-Verdunstersystem (V, LR'; V, LR") nach Anspruch 14 und Verdunstersystem nach Anspruch 15,
**dadurch gekennzeichnet, dass**
die Verdunstereinheit (100) im Zusammenbauzustand auf der Oberseite des jeweiligen Unterträgers (LR-UT; LR-UT'; LR-UT") befestigt ist.

17. Standard-Verdunstersystem (V, LR'; V, LR") nach Anspruch 14 und Verdunstersystem nach Anspruch 15,
**dadurch gekennzeichnet, dass**
an dem jeweiligen Standard-Wabenleerrähmchen (LR'; LR") oder dem herkömmlichen Wabenleerrähmchen (LR) ein Schutzelement (11) und ein Verdunstungsvlies (S9) anbringbar ist, die entweder unabhängig voneinander oder vor der Anordnung an dem jeweiligen Standard-Wabenleerrähmchen (LR', LR") nach Anspruch 14 oder dem Wabenleerrähmchen (LR) nach Anspruch 15 miteinander randseitig und/oder teilflächig oder vollflächig zusammengefügt, insbesondere verschweißt sind.
